(19)

Europäisches
Patentamt
European
Patent Office
Office européen
des brevets

(11) **EP 4 543 099 A1**

(12) **EUROPEAN PATENT APPLICATION**
published in accordance with Art. 153(4) EPC

(43) Date of publication:
**23.04.2025 Bulletin 2025/17**

(21) Application number: **23838723.7**

(22) Date of filing: **29.06.2023**

(51) International Patent Classification (IPC):
***H04W 52/02*** (2009.01)

(52) Cooperative Patent Classification (CPC):
**H04W 52/02; H04W 76/28**

(86) International application number:
**PCT/CN2023/104267**

(87) International publication number:
**WO 2024/012231 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.07.2022 CN 202210815094**

(71) Applicant: **Huawei Technologies Co., Ltd.
Shenzhen, Guangdong 518129 (CN)**

(72) Inventor: **FAN, Qiang
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD AND APPARATUS**

(57) This application provides a communication method and apparatus. In the method, a terminal device receives first indication information, where the first indication information indicates candidate M starting moments of a DRX on duration timer, each of M-1 starting moments in the M starting moments other than a latest starting moment is corresponding to one monitoring window, and M is an integer greater than or equal to 2. The terminal device monitors a first signal in a monitoring window corresponding to each of the M-1 starting moments, where the first signal indicates to start the DRX on duration timer. If the first signal is obtained through monitoring in a monitoring window corresponding to a first starting moment, the DRX on duration timer is started at the first starting moment, where the first starting moment is one of the M-1 starting moments. It can be learned that there are a plurality of candidate starting moments of the DRX on duration timer. In this way, running duration of the DRX on duration timer can be reduced, and power saving effect of the terminal device can be improved.

Communication
method 100

FIG. 9

EP 4 543 099 A1

## Description

This application claims priority to Chinese Patent Application No. 202210815094.2, filed with the China National Intellectual Property Administration on July 12, 2022 and entitled "COMMUNICATION METHOD AND APPARATUS", which is incorporated herein by reference in its entirety.

## TECHNICAL FIELD

This application relates to the communication field, and in particular, to a communication method and apparatus.

## BACKGROUND

Extended reality (extended reality, XR) refers to a combination of real and virtual environments generated by computing technologies and wearable devices, and can be used for human-machine interaction. Generally, an XR service periodically generates data frames at a frame rate. An XR service in a downlink direction is used as an example. In an ideal case, a base station periodically receives data frames of the XR service and sends the data frames to a terminal. Correspondingly, the terminal periodically receives the data frames from the base station. However, in actual transmission, a coding delay, a network transmission delay, and the like of the data frame cause jitter (jitter) of a time at which the data frame arrives at the base station, and a time at which the terminal receives the data frame also jitters.

In a new radio (new radio, NR) system, a base station may configure a discontinuous reception (discontinuous reception, DRX) on duration timer (drx-onDurationTimer) for a terminal, so that the terminal is in a DRX active state in duration of the DRX on duration timer, to monitor a physical downlink control channel (physical downlink control channel, PUCCH), and does not need to monitor the PDCCH in another time, thereby reducing power consumption of the terminal. However, when this manner is applied to the XR service, to cope with possible jitter of a time at which the terminal receives a data frame, the base station configures the DRX on duration timer for the terminal to cover an entire jitter range. As a result, the terminal is in the DRX active state for a long time, and consequently, power saving effect is poor.

## SUMMARY

Embodiments of this application provide a communication method and apparatus, to improve power saving effect of a terminal device.

According to a first aspect, an embodiment of this application provides a communication method. The method includes: receiving first indication information, where the first indication information indicates candidate M starting moments of a DRX on duration timer, each of M-1 starting moments in the M starting moments other than a latest starting moment is corresponding to one monitoring window, and M is an integer greater than or equal to 2; monitoring a first signal in a monitoring window corresponding to each of the M-1 starting moments, where the first signal indicates to start the DRX on duration timer; and if the first signal is obtained through monitoring in a monitoring window corresponding to a first starting moment, starting the DRX on duration timer at the first starting moment, where the first starting moment is one of the M-1 starting moments.

It can be learned that there are a plurality of candidate starting moments of the DRX on duration timer. The terminal device may determine, by monitoring the first signal, the starting moment at which the DRX on duration timer is started. The first signal may be sent by a network device to the terminal device when the network device detects that the service data from the core network device arrives. In this case, the terminal device may receive the service data from the network device quickly after starting the DRX on duration timer. In this way, a running time of the DRX on duration timer does not need to cover an entire jitter range, thereby reducing a time at which the terminal device is in a DRX active state, and improving power saving effect of the terminal device.

In an optional implementation, the method further includes: if no first signal is obtained through monitoring in monitoring windows respectively corresponding to the M-1 starting moments, the DRX on duration timer is started at the latest starting moment in the M starting moments.

In this implementation, if the terminal device obtains, through monitoring, no first signal in the monitoring windows respectively corresponding to the M-1 starting moments, it indicates that no service data from the core network device arrives at the network device in the monitoring windows respectively corresponding to the M-1 starting moments. In this case, the terminal device starts the DRX on duration timer at the latest starting moment in the M starting moments, so that it can be ensured that the terminal device definitely starts the DRX on duration timer in a DRX cycle to receive periodic service data, thereby avoiding a case in which the service data cannot be sent to the terminal device in time because the terminal device does not start the DRX on duration timer, which causes service data timeout and affects terminal service experience.

In an optional implementation, the method further includes: skipping a monitoring window corresponding to a remaining starting moment in the M-1 starting moments, where the remaining starting moment is a starting moment that is in the M-1 starting moments and that is later than the first starting moment. In other words, the terminal device may not perform monitoring in the monitoring window corresponding to the remaining starting moment, thereby further reducing power consumption of the terminal device.

In an optional implementation, the M starting moments include a second starting moment, and an advance starting moment earlier than the second starting moment and/or a delayed starting moment later than the second starting moment; and the second starting moment is obtained by offsetting a DRX start moment of a DRX cycle backward by a DRX delay. It can be learned that, on the basis of the starting moment determined based on the DRX start moment of the DRX cycle and the DRX delay, at least one candidate starting moment of the DRX on duration timer may be additionally configured.

Optionally, the first indication information includes M-1 time domain offsets, and the advance starting moment and/or the delayed starting moment are/is obtained based on the M-1 time domain offsets.

In an optional implementation, if a second signal is received in a monitoring window corresponding to a third starting moment, the DRX on duration timer is not started at the third starting moment and N starting moments, and the second signal indicates not to start the DRX on duration timer at the N starting moments. The third starting moment is one of the M-1 starting moments, the N starting moments are N consecutive starting moments that are in the M-1 starting moments and that are later than the third starting moment, and N is a positive integer less than M-1. This implementation may be applied to a case in which no service data from the core network device arrives at the network device in a time period, and the terminal device may skip a starting moment in the time period.

Optionally, the method further includes: skipping monitoring windows respectively corresponding to the N starting moments. In other words, the terminal device may not perform monitoring in the monitoring windows respectively corresponding to the N starting moments, thereby further reducing power consumption of the terminal device.

According to a second aspect, an embodiment of this application provides a communication method. The method includes: sending first indication information, where the first indication information indicates candidate M starting moments of a DRX on duration timer, each of M-1 starting moments in the M starting moments other than a latest starting moment is corresponding to one monitoring window, and M is an integer greater than or equal to 2; and sending a first signal in a monitoring window corresponding to a first starting moment, where the first signal indicates to start the DRX on duration timer, and the first starting moment is one of the M-1 starting moments.

It can be learned that there are a plurality of candidate starting moments of the DRX on duration timer. The network device may indicate, by using the first signal, the starting moment at which the terminal device starts the DRX on duration timer. The first signal may be sent by the network device to the terminal device when the network device detects that the service data from the core network device arrives. It can be learned that the network device may match the starting moment of the DRX on duration timer based on an actual arrival time of the service data. In this way, a running time of the DRX on duration timer does not need to cover an entire jitter range, thereby reducing a time at which the terminal device is in a DRX active state, and improving power saving effect of the terminal device.

In an optional implementation, the M-1 starting moments include a second starting moment, and an advance starting moment earlier than the second starting moment and/or a delayed starting moment later than the second starting moment. The second starting moment is obtained by offsetting a DRX start moment of a DRX cycle backward by a DRX delay. It can be learned that, in addition to configuring the starting moment determined based on the DRX start moment of the DRX cycle and the DRX delay, the network device may additionally configure at least one candidate starting moment based on the starting moment.

In an optional implementation, the first indication information includes M-1 time domain offsets, and the advance starting moment and/or the delayed starting moment are/is obtained based on the M-1 time domain offsets.

In an optional implementation, the method further includes: sending a second signal in a monitoring window corresponding to a third starting moment, where the second signal indicates not to start the DRX on duration timer at N starting moments. The third starting moment is one of the M-1 starting moments, the N starting moments are N consecutive starting moments that are in the M-1 starting moments and that are later than the third starting moment, and N is a positive integer less than M-1. This implementation may be applied to a case in which the network device predicts that no service data from the core network device arrives in a time period, and indicates, by using the second signal, the terminal device to skip a starting moment in the time period.

In an optional implementation, service data is data of an XR service; and before the sending first indication information, the method further includes: receiving characteristic information of the XR service from a core network device, where the characteristic information of the XR service includes a jitter range and/or a frame rate option set of the XR service; and determining the M starting moments based on the jitter range; and/or determining the DRX cycle based on the frame rate option set. In this implementation, the configured M starting moments and the DRX cycle can be applicable to the XR service having the foregoing characteristics, and reliability of the M starting moments and the DRX cycle is improved.

Optionally, the communication method is performed by an architecture in which a distributed unit (distributed unit, DU) is separated from a central unit (central unit, CU). The receiving characteristic information of the XR service from a core network device includes: The CU receives the characteristic information of the XR service from the core network device, and sends the characteristic information of the XR service to the DU. The determining the M starting moments based on the jitter range includes: The DU determines the M starting moments based on the jitter range. The determining the DRX cycle based on the frame rate option set includes: The DU determines the DRX cycle based on the frame rate option set.

According to a third aspect, an embodiment of this application provides a communication method. The method includes: receiving second indication information, where the second indication information indicates L-1 time domain intervals and L search space set groups (search space set group, SSSG), the L-1 time domain intervals are in one-to-one correspondence with L-1 SSSGs in the L SSSGs, distribution densities of PDCCH monitoring occasions separately configured for the L SSSGs are different, and L is an integer greater than 1. For each SSSG in the SSSGs respectively corresponding to the L-1 time domain intervals, a PDCCH is monitored in a running period of a timer corresponding to the SSSG, where a starting moment of a timer corresponding to each SSSG is a start moment of a time domain interval corresponding to the SSSG, timing duration is duration of the time domain interval corresponding to the SSSG, and an expiration moment is an end moment of the time domain interval corresponding to the SSSG.

It can be learned that the terminal device monitors the PDCCH in a running period of a timer corresponding to each SSSG, and may automatically switch to use a next SSSG for monitoring after the timer expires. Compared with a manner in which switching is performed after a signal indicating to perform SSSG switching is received, this manner is more flexible, and signaling overheads are less.

In an optional implementation, L is equal to 2, and the method further includes: if a PDCCH is obtained through monitoring on a PDCCH monitoring occasion configured for a first SSSG, a timer corresponding to the first SSSG is stopped. The first SSSG is an SSSG that is corresponding to a time domain interval indicated by the second indication information and that is in two SSSGs. If no PDCCH is obtained through monitoring on the PDCCH monitoring occasion configured for the first SSSG, and the timer corresponding to the first SSSG expires, the PDCCH is monitored on a PDCCH monitoring occasion configured for a second SSSG, where the second SSSG is an SSSG in the two SSSGs other than the first SSSG.

In an optional implementation, a start moment of a foremost time domain interval in the L-1 time domain intervals is the same as a starting moment of a discontinuous reception DRX on duration timer.

According to a fourth aspect, an embodiment of this application provides a communication method, where the method includes: sending second indication information, where the second indication information indicates L-1 time domain intervals and L SSSGs, the L-1 time domain intervals are in one-to-one correspondence with L-1 SSSGs in the L SSSGs, L is an integer greater than 1, and distribution densities of physical downlink control channel PDCCH monitoring occasions separately configured for the L SSSGs are different.

It can be learned that the network device configures, for the terminal device, SSSGs used in all time domain intervals. In this way, the terminal device may determine a timer corresponding to each SSSG, and the terminal device monitors the PDCCH in a running period of the timer corresponding to each SSSG, and may automatically switch to a next SSSG for monitoring after the timer expires. Compared with a manner in which the network device sends, to the terminal device only at a moment at which the network device expects the terminal device to perform SSSG switching, a signal indicating to perform SSSG switching, this manner is more flexible, and signaling overheads are less.

In an optional implementation, a start moment of a foremost time domain interval in the L-1 time domain intervals is the same as a starting moment of a discontinuous reception DRX on duration timer.

In an optional implementation, the L-1 time domain intervals and the L SSSGs are determined based on a probability distribution that an arrival time of service data from a core network device complies with. For a time domain interval with a large probability of arrival of the service data, the network device may configure an SSSG with a high PDCCH monitoring density for the terminal device. For a time domain interval with a small probability of arrival of the service data, the network device may configure an SSSG with a low PDCCH monitoring density for the terminal device. In this way, the terminal device does not need to monitor the PDCCH for a long time in the time domain interval with a small probability of arrival of the service data, thereby improving power saving effect of the terminal device.

In an optional implementation, service data is data of an XR service; and before the sending second indication information, the method further includes: receiving characteristic information of an XR service from the core network device, where the characteristic information of the XR service includes one or more of the following: a jitter range of the XR service, the probability distribution that the arrival time of the service data complies with, and a frame rate option set; determining the L-1 time domain intervals and the L SSSGs based on the jitter range and/or the probability distribution; and/or determining the DRX cycle based on the frame rate option set. In this implementation, the configured L-1 time domain intervals, L SSSGs, and DRX cycle can be applicable to an XR service having the foregoing characteristics, and reliability of the L-1 time domain intervals, the L SSSGs, and the DRX cycle is improved.

Optionally, the method is performed by an architecture in which a DU is separated from a CU. The receiving characteristic information of the XR service from a core network device includes: The CU receives the characteristic information of the XR service from the core network device, and sends the characteristic information of the XR service to the DU. The determining the L-1 time domain intervals and the L SSSGs based on the jitter range and/or the probability distribution includes: The DU determines the L-1 time domain intervals and the L SSSGs based on the jitter range and/or the probability distribution. The determining the DRX cycle based on the frame rate option set includes: The DU determines the DRX cycle based on the frame rate option set.

According to a fifth aspect, this application further provides a communication apparatus. The communication apparatus has functions of implementing some or all of the implementations of the first aspect, or has functions of implementing some or all of the function implementations of the second aspect, or has functions of implementing some or all of the function implementations of the third aspect, or has functions of implementing some or all of the function implementations of the fourth aspect. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing methods. The processing unit may be configured to control the communication unit to perform data/signaling receiving and sending. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication unit is configured to receive first indication information, where the first indication information indicates candidate M starting moments of a DRX on duration timer, each of M-1 starting moments in the M starting moments other than a latest starting moment is corresponding to one monitoring window, and M is an integer greater than or equal to 2.

The processing unit is configured to monitor a first signal in a monitoring window corresponding to each of the M-1 starting moments, where the first signal indicates to start the DRX on duration timer.

The processing unit is further configured to: if the first signal is obtained through monitoring in a monitoring window corresponding to a first starting moment, the DRX on duration timer is started at the first starting moment, where the first starting moment is one of the M-1 starting moments.

In addition, for another optional implementation of the communication apparatus in this aspect, refer to related content of the first aspect. Details are not described herein again.

In another implementation, the communication unit is configured to send first indication information, where the first indication information indicates candidate M starting moments of a DRX on duration timer, each of M-1 starting moments in the M starting moments other than a latest starting moment is corresponding to one monitoring window, and M is an integer greater than or equal to 2.

The communication unit is further configured to send a first signal in a monitoring window corresponding to a first starting moment, where the first signal indicates to start the DRX on duration timer, and the first starting moment is one of the M-1 starting moments.

In addition, for another optional implementation of the communication apparatus in this aspect, refer to related content of the second aspect. Details are not described herein again.

In another implementation, the communication unit is configured to receive second indication information, where the second indication information indicates L-1 time domain intervals and L SSSGs, the L-1 time domain intervals are in one-to-one correspondence with L-1 SSSGs in the L SSSGs, distribution densities of PDCCH monitoring occasions separately configured for the L SSSGs are different, and L is an integer greater than 1.

The processing unit is configured to: for each SSSG in the SSSGs respectively corresponding to the L-1 time domain intervals, a PDCCH is monitored in a running period of a timer corresponding to the SSSG, where a starting moment of a timer corresponding to each SSSG is a start moment of a time domain interval corresponding to the SSSG, timing duration is duration of the time domain interval corresponding to the SSSG, and an expiration moment is an end moment of the time domain interval corresponding to the SSSG.

In addition, for another optional implementation of the communication apparatus in this aspect, refer to related content of the third aspect. Details are not described herein again.

In another implementation, the communication unit is configured to send second indication information, where the second indication information indicates L-1 time domain intervals and L SSSGs, the L-1 time domain intervals are in one-to-one correspondence with L-1 SSSGs in the L SSSGs, L is an integer greater than 1, and distribution densities of PDCCH monitoring occasions separately configured for the L SSSGs are different.

In addition, for another optional implementation of the communication apparatus in this aspect, refer to related content of the fourth aspect. Details are not described herein again.

In an example, the communication unit may be a transceiver or a communication interface, the storage unit may be a memory, and the processing unit may be a processor. The processor may be configured to perform the method according to the first aspect, the second aspect, the third aspect, or the fourth aspect by using a logic circuit or by running a computer program. The transceiver may be configured to receive and send a signal. The memory may be configured to store a computer program.

In an implementation, the transceiver is configured to receive first indication information, where the first indication information indicates candidate M starting moments of a DRX on duration timer, each of M-1 starting moments in the M starting moments other than a latest starting moment is corresponding to one monitoring window, and M is an integer greater than or equal to 2.

The processor is configured to monitor a first signal in a monitoring window corresponding to each of the M-1 starting moments, where the first signal indicates to start the DRX on duration timer.

The processor is further configured to: if the first signal is obtained through monitoring in a monitoring window corresponding to a first starting moment, the DRX on duration timer is started at the first starting moment, where the first starting moment is one of the M-1 starting moments.

In addition, for another optional implementation of the communication apparatus in this aspect, refer to related content of the first aspect. Details are not described herein again.

In another implementation, the transceiver is configured to send first indication information, where the first indication information indicates candidate M starting moments of a DRX on duration timer, each of M-1 starting moments in the M starting moments other than a latest starting moment is corresponding to one monitoring window, and M is an integer greater than or equal to 2.

The transceiver is further configured to send a first signal in a monitoring window corresponding to a first starting moment, where the first signal indicates to start the DRX on duration timer, and the first starting moment is one of the M-1 starting moments.

In addition, for another optional implementation of the communication apparatus in this aspect, refer to related content of the second aspect. Details are not described herein again.

In another implementation, the transceiver is configured to receive second indication information, where the second indication information indicates L-1 time domain intervals and L SSSGs, the L-1 time domain intervals are in one-to-one correspondence with L-1 SSSGs in the L SSSGs, distribution densities of PDCCH monitoring occasions separately configured for the L SSSGs are different, and L is an integer greater than 1.

The processor is configured to: for each SSSG in the SSSGs respectively corresponding to the L-1 time domain intervals, a PDCCH is monitored in a running period of a timer corresponding to the SSSG, where a starting moment of a timer corresponding to each SSSG is a start moment of a time domain interval corresponding to the SSSG, timing duration is duration of the time domain interval corresponding to the SSSG, and an expiration moment is an end moment of the time domain interval corresponding to the SSSG.

In addition, for another optional implementation of the communication apparatus in this aspect, refer to related content of the third aspect. Details are not described herein again.

In another implementation, the transceiver is configured to send second indication information, where the second indication information indicates L-1 time domain intervals and L SSSGs, the L-1 time domain intervals are in one-to-one correspondence with L-1 SSSGs in the L SSSGs, L is an integer greater than 1, and distribution densities of PDCCH monitoring occasions separately configured for the L SSSGs are different.

In addition, for another optional implementation of the communication apparatus in this aspect, refer to related content of the fourth aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be divided into an analog baseband processor and a digital baseband processor. The analog baseband processor and the transceiver may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. Such a chip may be referred to as a system-on-a-chip (System-on-a-Chip, SoC). Whether the components are separately disposed on different chips or integrated and disposed on one or more chips usually depends on a requirement of a product design. Implementation forms of the foregoing components are not limited in embodiments of this application.

According to a sixth aspect, this application further provides a processor, configured to perform the foregoing methods. In a process of performing these methods, a process of sending the foregoing signal and a process of receiving the foregoing signal in the foregoing method may be understood as a process of outputting the foregoing signal by the processor and a process of inputting the foregoing signal by the processor. When outputting the foregoing signal, the processor outputs the foregoing signal to the transceiver, so that the transceiver transmits the signal. After the foregoing signal is output by the processor, other processing may further need to be performed on the signal, and then the signal arrives at the transceiver. Similarly, when the processor receives the input signal, the transceiver receives the signal, and inputs the signal into the processor. Further, after the transceiver receives the signal, other processing may further need to be performed on the signal, and then the signal is input to the processor.

Unless otherwise specified, or if operations such as sending and receiving related to the processor do not contradict an actual function or internal logic of the operations in related descriptions, all the operations may be more generally understood as operations such as outputting, receiving, and inputting of the processor, instead of operations such as sending and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in embodiments of this application.

According to a seventh aspect, this application further provides a communication system. The system includes at least one network device and at least one terminal device in the foregoing aspects. In another possible design, the system may further include another device that interacts with the network device and/or the terminal device in the solutions provided in this application.

According to an eighth aspect, this application provides a computer-readable storage medium, configured to store instructions. When the instructions are run by a computer, the method according to any one of the first aspect, the second aspect, the third aspect, or the fourth aspect is performed.

According to a ninth aspect, this application further provides a computer program product including instructions. When the computer program product runs on a computer, the method according to any one of the first aspect, the second aspect, the third aspect, or the fourth aspect is performed.

According to a tenth aspect, this application provides a chip system. The chip system includes a processor and an interface. The interface is configured to obtain a program or an instruction. The processor is configured to invoke the program or the instruction to implement a function in the first aspect, or is configured to invoke the program or the instruction to implement a function in the second aspect, or is configured to invoke the program or the instruction to implement a function in the third aspect, or is configured to invoke the program or the instruction to implement a function in the fourth aspect. In a possible design, the chip system further includes a memory. The memory is configured to store program instructions and data that are necessary for a terminal. The chip system may include a chip, or may include a chip and another discrete component.

## BRIEF DESCRIPTION OF DRAWINGS

FIG. 1 is a diagram of a structure of a communication system according to an embodiment of this application;

FIG. 2 is a diagram of a structure of another communication system according to an embodiment of this application;

FIG. 3 is a diagram of an architecture in which a CU is separated from a DU according to an embodiment of this application;

FIG. 4 is a diagram of an arrival time distribution of data frames in an XR service according to an embodiment of this application;

FIG. 5 is a diagram of a WUS mechanism according to an embodiment of this application;

FIG. 6 is a diagram of an SSSG according to an embodiment of this application;

FIG. 7 is a diagram of a distribution of DRX on duration timers according to an embodiment of this application;

FIG. 8 is a diagram of SSSG switching according to an embodiment of this application;

FIG. 9 is a schematic flowchart of a communication method 100 according to an embodiment of this application;

FIG. 10 is a diagram of a distribution of M starting moments according to an embodiment of this application;

FIG. 11 is a diagram of a monitoring window corresponding to a starting moment according to an embodiment of this application;

FIG. 12 is a diagram of another distribution of M starting moments according to an embodiment of this application;

FIG. 13 is a schematic flowchart of a communication method 200 according to an embodiment of this application;

FIG. 14 is a diagram of an SSSG distribution according to an embodiment of this application;

FIG. 15 is a diagram of another SSSG distribution according to an embodiment of this application;

FIG. 16 is a schematic flowchart of a communication method 300 according to an embodiment of this application;

FIG. 17 is a diagram of interaction between a CU and a DU according to an embodiment of this application;

FIG. 18 is a diagram of a structure of a communication apparatus according to an embodiment of this application;

FIG. 19 is a diagram of a structure of another communication apparatus according to an embodiment of this application; and

FIG. 20 is a diagram of a structure of a chip according to an embodiment of this application.

## DESCRIPTION OF EMBODIMENTS

The following clearly and completely describes the technical solutions in embodiments of this application with reference to the accompanying drawings in embodiments of this application.

To better understand a communication method disclosed in embodiments of this application, a communication system to which embodiments of this application are applicable is described.

Embodiments of this application may be applied to a 5th generation (5th generation, 5G) mobile communication technology system such as a new radio (new radio, NR) system. With continuous development of communication technologies, the technical solutions in embodiments of this application may be further applied to a subsequent evolved communication system, such as a 6th-generation (6th-Generation, 6G) mobile communication technology system and a 7th generation (7th-Generation, 7G) mobile communication technology system.

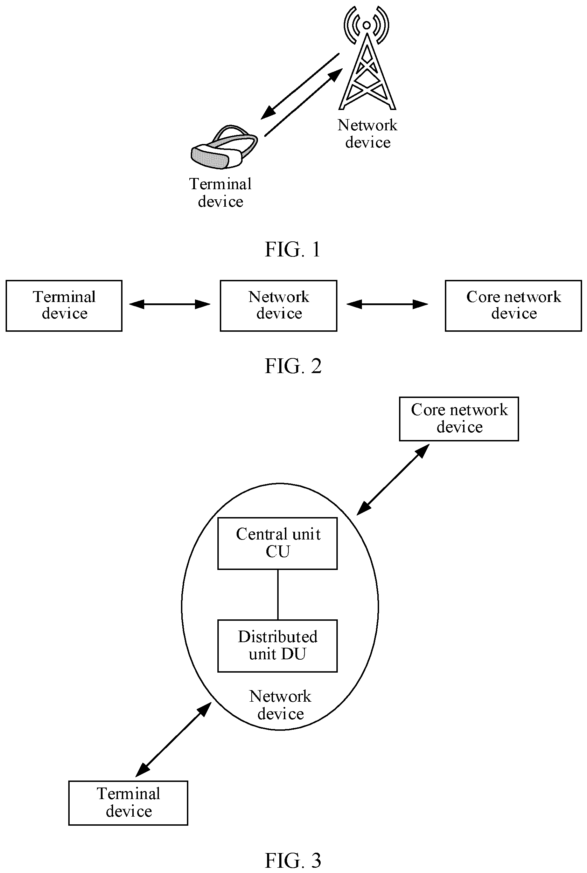

FIG. 1 is a diagram of a structure of a communication system according to an embodiment of this application. The communication system may include but is not limited to one network device and one terminal device. The communication system may further include a channel for data transmission between the network device and the terminal device, for example, a transmission medium such as an optical fiber, a cable, or an atmosphere. Quantities and forms of devices shown in FIG. 1 are used as examples and do not constitute a limitation on embodiments of this application. During actual application, two or more network devices and two or more terminal devices may be included. The communication system shown in FIG. 1 is described by using one network device and one terminal device as an example. In FIG. 1, an example in which a network device is a base station, and a terminal device is an extended reality (extended reality, XR) apparatus is used.

In addition, the communication system shown in FIG. 1 may further include a device (which may be referred to as a core network device) in a core network, as shown in FIG. 2. Specifically, the communication system may further include a core network device that can communicate with a network device, for example, an access and mobility management function (access and mobility management function, AMF) entity. The AMF entity may be responsible for functions such as security control and access authentication of a non-access stratum (non-access stratum, NAS) and an access stratum (access stratum, AS). The communication system may further include a plurality of core network devices that can communicate with each other, for example, an AMF entity, an application function (application function, AF) entity, and a unified data management (unified data management, UDM) entity.

In embodiments of this application, the network device is an access network device, and may be a radio access network (radio access network, RAN) node/device (or referred to as a radio access network device) that connects the terminal device to a wireless network. The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home network device (for example, a home evolved NodeB, or home NodeB, HNB), a baseband unit (baseband unit, BBU), and an access point (access point, AP), a wireless relay node, a wireless backhaul node, a transmission and reception point (transmission and reception point, TRP), a transmission point (transmission point, TP), or the like in a wireless fidelity (wireless fidelity, Wi-Fi) system; or may be a device used in a 5G, 6G, or even 7G system, for example, a gNB or a transmission point (TRP or TP) in an NR system, one or a group of antenna panels (including a plurality of antenna panels) of a network device in the 5G system, or a network node that forms a gNB or a transmission point, for example, a baseband unit (BBU), a distributed unit (distributed unit, DU), or a road side unit (road side unit, RSU) in a vehicle to everything (vehicle to everything, V2X) or intelligent driving scenario.

In some deployments, the network device may be an architecture in which a central unit (central unit, CU) is separated from a DU, as shown in FIG. 3. The CU and the DU may separately implement some functions of the network device. For example, the CU may implement functions of a radio resource control (radio resource control, RRC) layer, a packet data convergence protocol (packet data convergence protocol, PDCP) layer, and the like, and the DU may implement functions of a radio link control (radio link control, RLC) layer, a media access control (media access control, MAC) layer, a physical (physical, PHY) layer, and the like. In this architecture, signaling generated by the CU may be sent to a terminal device through the DU, or signaling generated by a terminal device may be sent to the CU through the DU.

In embodiments of this application, the terminal device may be a device that can provide voice and/or data connectivity for a user. The terminal device may also be referred to as user equipment (user equipment, UE), a terminal, an access terminal, a subscriber unit, a subscriber station, a mobile site, a mobile station (mobile station, MS), a remote station, a remote terminal, a mobile terminal (mobile terminal, MT), a user terminal, a user agent, or a user apparatus, and may be used in the 5G or even 6G system. The terminal device in embodiments of this application may be a mobile phone (mobile phone), a tablet computer (Pad), a computer with a wireless transceiver function, a virtual reality (virtual reality, VR) terminal device, an augmented reality (augmented reality, AR) terminal device, a mixed reality (mixed reality, MR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), and an RSU of the foregoing wireless terminal type. The terminal device in embodiments of this application may alternatively be a device that can perform sidelink (sidelink) communication, for example, a vehicle-mounted terminal or a handheld terminal that can perform V2X communication. This is not limited in this application.

For ease of understanding embodiments disclosed in this application, the following two points are described.

(1) In embodiments disclosed in this application, an NR network scenario in a wireless communication network is used as an example of scenarios for description. It should be noted that the solutions in embodiments disclosed in this application are applied to another wireless communication network, and a corresponding name may also be replaced with a name of a corresponding function in the another wireless communication network.

(2) Aspects, embodiments, or features of this application are presented in embodiments disclosed in this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Related concepts in embodiments of this application are then briefly described.

1. XR service

XR refers to a combination of real and virtual environments generated by computer technologies and wearable devices, and related human-machine interaction. The XR includes the following several typical forms: AR, VR, and MR. In addition, the XR service has characteristic attributes such as a frame rate, a packet delay budget (packet delay budget, PDB), and jitter (jitter). The following uses a downlink XR service as an example to describe the characteristic attributes of the XR service.

The frame rate refers to a quantity of data frames generated per second, and is measured by frames per second (frames per second, fps). Generally, the XR service periodically generates data frames at a frame rate. For example, a frame rate of a video in an AR service or a VR service may be 60 fps, that is, 60 frames of video images are generated per second, that is, one video frame is generated about every 16.66 ms. In addition, a transmission rate of the video frame may be 20 million bits per second (million bits per second, Mbps), 45 Mbps, or the like.

The PDB represents a duration requirement for a time period, and the time period starts from a moment at which the network device receives a data frame from the core network and ends at a moment at which the network device successfully sends the data frame to the terminal device. The data frame may be sent by a user plane function (user plane function, UPF) entity in the core network to the network device. Generally, the PDB in the AR or VR service is 10 milliseconds (millisecond, ms).

Jitter indicates that there is a time difference between a time at which a data frame actually arrives at the network device and an ideal arrival time. In an ideal case, a data frame in the XR service periodically arrives at the network device. However, in an actual case, due to factors such as a coding delay and a network transmission delay of the data frame, jitter within a specific range may exist between the time at which the data frame actually arrives at the network device and the ideal arrival time.

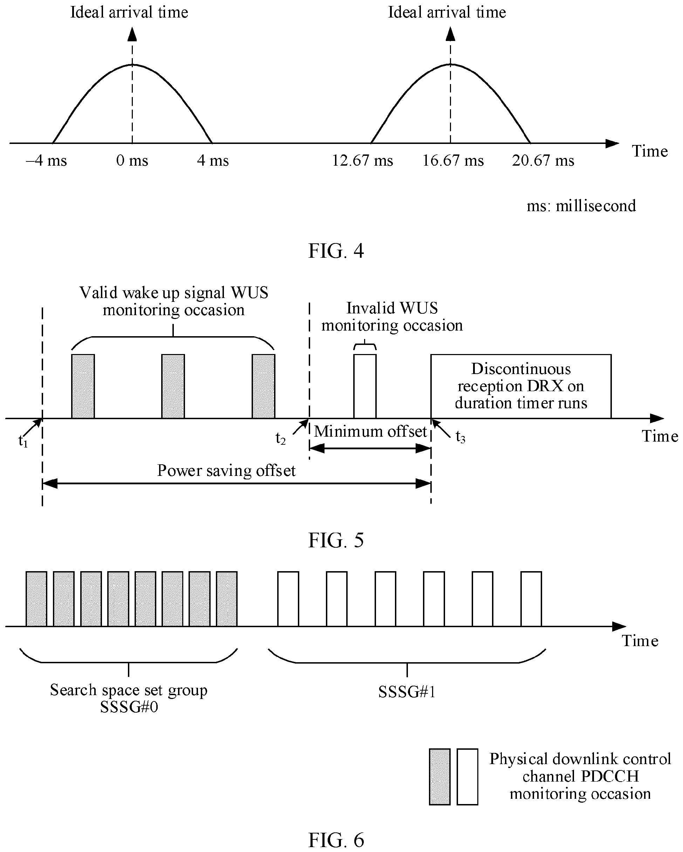

A jitter range indicates a range of the time difference between the time at which the data frame actually arrives at the network device and the ideal arrival time. In addition, the jitter range may be determined based on a probability distribution that the time at which the data frame actually arrives at the network device complies with. The probability distribution may be a statistical distribution such as Gaussian distribution, Rayleigh distribution, and Rice distribution. With reference to FIG. 4, an example in which the frame rate is 60 fps, that is, a cycle of the data frame is approximately 16.67 ms is used, and the time at which the data frame from the core network actually arrives at the network device complies with a truncated Gaussian distribution in which an average value is 0 and a variance is 2 ms. In this case, the jitter range is approximately [-4 ms, 4 ms].

2. Discontinuous reception (discontinuous reception, DRX) mechanism

The DRX mechanism is a mechanism for controlling a terminal device to monitor a physical downlink control channel (physical downlink control channel, PDCCH). The network device may configure the DRX mechanism for the terminal device. The terminal device configured with the DRX mechanism turns on a receiver only in a necessary time to enter a DRX active state to monitor the PDCCH, and may turn off the receiver in another time to enter a DRX sleep state. The terminal device in the DRX sleep state may not monitor the PDCCH. It can be learned that the terminal device configured with the DRX mechanism does not need to continuously monitor the PDCCH, so that power consumption of the terminal device can be reduced.

In the DRX mechanism, the network device may configure the following parameters for the terminal device: a DRX cycle (DRX cycle), a start moment of a DRX cycle (drx-StartOffset), a DRX on duration timer (drx-onDurationTimer), a DRX delay (drx-SlotOffset), and the like. The following describes these parameters.

The DRX cycle is a discontinuous reception cycle of the terminal device. In other words, the terminal device may periodically be in the DRX active state in some time periods. In each DRX cycle, the terminal device is in the DRX active state in a period of time to monitor the PDCCH, and is in the DRX sleep state in another period of time. In addition, the DRX cycle may be a long cycle or a short cycle, where the long cycle is an integer multiple of the short cycle.

drx-StartOffset is used to determine a subframe at which the DRX cycle starts.

drx-onDurationTimer defines a period of continuous downlink duration used by the terminal device to monitor the PDCCH in the DRX cycle, that is, duration in which the terminal device maintains the DRX active state after being woken up from the DRX sleep state. In a running period of the DRX on duration timer, the terminal device may monitor the PDCCH.

drx-SlotOffset indicates a time difference between the start moment of the DRX cycle and a starting moment of drx-onDurationTimer. The starting moment of drx-onDurationTimer is a moment at which the start moment of the DRX cycle is offset backward by drx-SlotOffset. Specifically, the starting moment of drx-onDuration-Timer is a moment at which a front boundary of a subframe indicated by drx-StartOffset is delayed backward by drx-SlotOffset.

3. Wake up signal (wake up signal, WUS) mechanism

In the WUS mechanism, the network device may configure a WUS occasion (which may also be referred to as a WUS monitoring occasion) for the terminal device, and a WUS occasion configured in each DRX cycle is located before the DRX on duration timer is started. The network device may send a WUS to the terminal device on the WUS occasion, to indicate the terminal device whether to start the DRX on duration timer. If the terminal device receives, on the WUS occasion, the WUS that indicates to start the DRX on duration timer, the terminal device starts the DRX on duration timer. Otherwise, the terminal device may not start the DRX on duration timer. This mechanism can avoid a case in which DRX on duration timers in all DRX cycles are started. Otherwise, in a case that no data arrives at the terminal device before the DRX on duration timer runs or when the DRX on duration timer runs, the terminal device still performs unnecessary PDCCH monitoring, thereby causing an unnecessary power loss.

The WUS may be downlink control information (downlink control information, DCI) scrambled by a power saving (power saving, PS) -radio network temporary identifier (radio network temporary identifier, RNTI) (PS-RNTI).

The WUS monitoring occasion can be a valid WUS monitoring occasion (valid WUS monitoring occasion) or an invalid WUS monitoring occasion (invalid WUS monitoring occasion). If the terminal device obtains through monitoring, on the valid WUS monitoring occasion, the WUS indicating the terminal device to start the DRX on duration timer, the terminal device starts the DRX on duration timer at the starting moment of the DRX on duration timer. Otherwise, the terminal device does not start the DRX on duration timer. The terminal device may ignore a WUS obtained through monitoring on the invalid WUS monitoring occasion.

In addition, the terminal device may determine the valid WUS monitoring occasion and the invalid WUS monitoring occasion based on a minimum offset (minimum offset) and a power saving offset (PS_offset). With reference to FIG. 5, a moment (that is, $t_1$ in FIG. 5) that is obtained by offsetting the starting moment (that is, $t_3$ in FIG. 5) of the DRX on duration timer forward by PS_offset to a moment (that is, $t_2$ in FIG. 5) obtained by offsetting the starting moment of the DRX on duration timer forward by the minimum offset, that is, $t_1$ to $t_2$, may be referred to as a WUS monitoring window, and a WUS monitoring occasion in the WUS monitoring window is the valid WUS monitoring occasion. From the moment (that is, $t_2$ in FIG. 5) obtained by offsetting the starting moment of the DRX on duration timer forward by the minimum offset to the starting moment (that is, $t_3$ in FIG. 5) of the DRX on duration timer, that is, $t_2$ to $t_3$, a WUS monitoring occasion is the invalid WUS monitoring occasion.

The minimum offset and the power saving offset may be determined by the terminal device and reported to the network device, or may be configured by the network device for the terminal device.

4. Search space set group (search space set group, SSSG)

At least one PDCCH monitoring occasion is configured for each SSSG, and the PDCCH monitoring occasion may be used by the terminal device to monitor the PDCCH. Specifically, the terminal device may monitor the PDCCH on the PDCCH monitoring occasion configured for the SSSG, and may not monitor the PDCCH at another time, so that power consumption of the terminal device can be reduced. In addition, the SSSG may be configured by the network device for the terminal device.

Densities of PDCCH monitoring occasions configured for different SSSGs may be different. The density of PDCCH monitoring occasions herein represents a density degree of distribution of PDCCH monitoring occasions in time domain. For example, FIG. 6 shows PDCCH monitoring occasions separately configured for SSSG#0 and SSSG#1. In comparison, PDCCH monitoring occasions configured for SSSG#0 are relatively dense, and PDCCH monitoring occasions configured for SSSG#1 are relatively sparse.

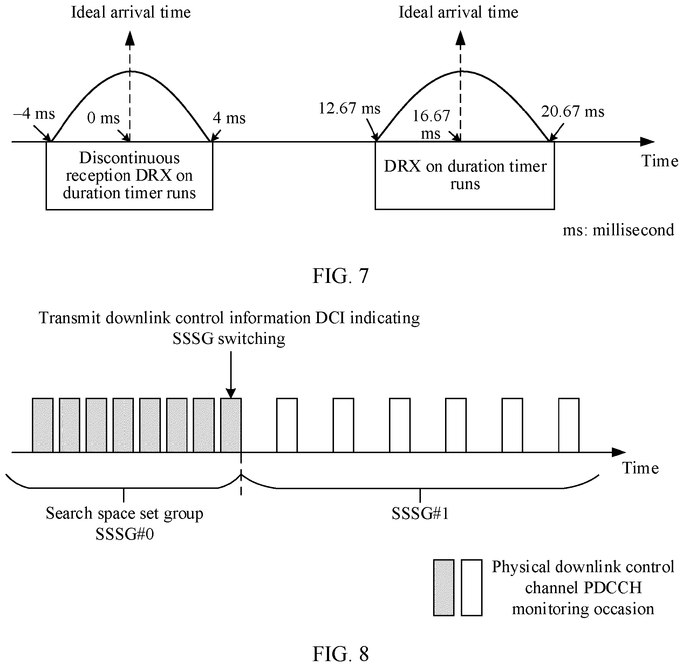

When the DRX mechanism is applied to the XR service, to cope with possible jitter of a time at which the terminal device receives a data frame, the network device configures the DRX on duration timer for the terminal device with a running time covering an entire jitter range. As a result, the terminal is in the DRX active state for a long time, and consequently, power saving effect is poor. With reference to FIG. 7, an example in which the frame rate is 60 fps, that is, the cycle of the data frame is approximately 16.67 ms, and the jitter range is [-4 ms, 4 ms] is used. To ensure that the terminal device can receive a data frame in the XR service in each cycle, running duration of the DRX on duration timer in each DRX cycle needs to be greater than or equal to 8 ms. It can be learned that a proportion of time at which the terminal device is in the DRX active state in one DRX cycle reaches or exceeds 50%.

In addition, in the WUS mechanism, the WUS can indicate the terminal device whether to start the DRX on duration timer, so that power of the terminal device can be saved. This mechanism may be applicable to an aperiodic service. However, for a periodic XR service, the terminal device needs to start the DRX on duration timer in each DRX cycle to receive a data frame of the XR service. It can be learned that this mechanism is not applicable to a periodic service, and expected power saving effect cannot be achieved.

An embodiment of this application provides a communication method 100. In the communication method 100, a terminal device receives first indication information, where the first indication information indicates candidate M starting moments of a DRX on duration timer, each of M-1 starting moments in the M starting moments other than a latest starting moment is corresponding to one monitoring window, and M is an integer greater than or equal to 2. A first signal is monitored in a monitoring window corresponding to each of the M-1 starting moments, where the first signal indicates to start the DRX on duration timer. If the first signal is obtained through monitoring in a monitoring window corresponding to a first starting moment, the DRX on duration timer is started at the first starting moment, where the first starting moment is one of the M-1 starting moments. It can be learned that there are a plurality of candidate starting moments of the DRX on duration timer. In this way, running duration of the DRX on duration timer can be reduced, and power saving effect of the terminal device can be improved.

A manner in which the network device configures an SSSG for the terminal device in a running period of the DRX on duration timer can reduce consumption of the terminal device. However, the network device sends, to the terminal device, DCI indicating the terminal device to perform SSSG switching when the network device expects the terminal device to perform SSSG switching (SSSG switching), so that the terminal device performs SSSG switching only after receiving the DCI, which lacks flexibility. For example, with reference to FIG. 8, the terminal device first uses SSSG#0, that is, performs monitoring on a PDCCH monitoring occasion configured for SSSG#0. After receiving, on a PDCCH monitoring occasion configured for SSSG#0, DCI that is from the network device and that indicates to perform SSSG switching, the terminal device switches to SSSG#1, that is, performs monitoring on a PDCCH monitoring occasion configured for SSSG#1.

An embodiment of this application provides a communication method 200. In the communication method 200, second indication information is received, where the second indication information indicates L-1 time domain intervals and L SSSGs, the L-1 time domain intervals are in one-to-one correspondence with L-1 SSSGs in the L SSSGs, distribution densities of PDCCH monitoring occasions separately configured for the L SSSGs are different, and L is an integer greater than 1. For each SSSG in the SSSGs respectively corresponding to the L-1 time domain intervals, a PDCCH is monitored in a running period of a timer corresponding to the SSSG, where a starting moment of a timer corresponding to each SSSG is a start moment of a time domain interval corresponding to the SSSG, timing duration is duration of the time domain interval corresponding to the SSSG, and an expiration moment is an end moment of the time domain interval corresponding to the SSSG. It can be learned that, after the timer expires, the terminal device may automatically switch to use a next SSSG for monitoring, which is more flexible, and signaling overheads are less.

The following describes the communication methods in embodiments of this application with reference to the accompanying drawings.

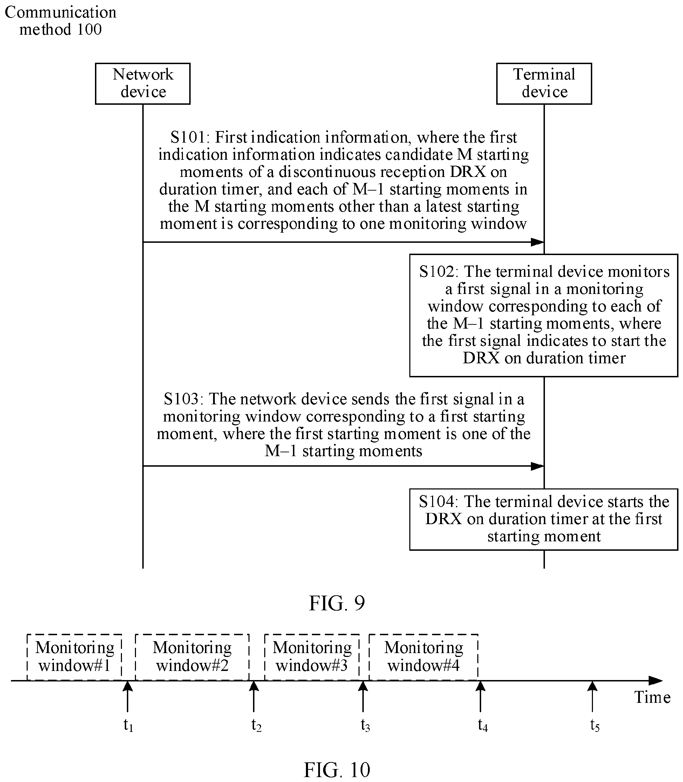

FIG. 9 is a schematic flowchart of a communication method 100 according to an embodiment of this application. The communication method 100 is described from a perspective of interaction between a network device and a terminal device. This embodiment may be performed by the terminal device and the network device, or may be performed by a component (for example, a processor, a chip, or a chip system) of the terminal device and the network device. The communication method 100 includes the following steps.

S101: The network device sends first indication information, where the first indication information indicates candidate M starting moments of a DRX on duration timer, each of M-1 starting moments in the M starting moments other than a latest starting moment is corresponding to one monitoring window, and correspondingly, the terminal device receives the first indication information. M is an integer greater than or equal to 2.

For example, with reference to FIG. 10, M is equal to 5, and candidate five starting moments that are of the DRX on duration timer and that are indicated by the first indication information include $t_1$, $t_2$, $t_3$, $t_4$, and $t_5$. Four starting moments in the five starting moments other than a latest starting moment $t_5$ are respectively corresponding to one monitoring window. Specifically, monitoring windows respectively corresponding to $t_1$, $t_2$, $t_3$, and $t_4$ are monitoring window#1, monitoring window#2, monitoring window#3, and monitoring window#4.

In addition, time differences between any two adjacent starting moments in the M starting moments may be the same or may be different. For example, in FIG. 10, in four time differences, namely, a time difference between $t_1$ and $t_2$, a time difference between $t_2$ and $t_3$, a time difference between $t_3$ and $t_4$, and a time difference between $t_4$ and $t_5$, there may be a same time difference, or may be different time differences.

In an optional implementation, the M starting moments include a second starting moment, and an advance starting moment earlier than the second starting moment and/or a delayed starting moment later than the second starting moment. The second starting moment is obtained by offsetting a DRX start moment of a DRX cycle backward by a DRX delay. It can be learned that this implementation may be adapted to a DRX mechanism in which the starting moment is determined based on the DRX start moment of the DRX cycle and the DRX delay. Based on the DRX mechanism, at least one candidate starting moment is additionally configured, so that complexity of upgrading and reconstructing the terminal device is low.

For example, with reference to FIG. 10, if the second starting moment is $t_5$, $t_1$, $t_2$, $t_3$, and $t_4$ are all advance starting moments earlier than $t_5$. If the second starting moment is $t_1$, $t_2$, $t_3$, $t_4$, and $t_5$ are all delayed starting moments later than $t_1$. If the second starting moment is $t_3$, both $t_1$ and $t_2$ are advance starting moments earlier than $t_3$, and both $t_4$ and $t_5$ are delayed starting moments later than $t_3$.

Optionally, drx cycle, drx-StartOffset, and drx-SlotOffset may be carried in the first indication information.

In an optional implementation, the first indication information may include M-1 time domain offsets, and the advance starting moment and/or the delayed starting moment may be obtained based on the M-1 time domain offsets. Optionally, the M-1 time domain offsets may be carried in the first indication information in a form of a list (list or sequence). The following uses an example in which the M-1 time domain offsets are represented in a form of a list to describe a specific implementation of determining the advance starting moment and/or the delayed starting moment based on the M-1 time domain offsets, as shown in Implementation 1 to Implementation 3.

Implementation 1: The M starting moments include a second starting moment and M-1 advance starting moments. In this case, the M-1 advance starting moments are obtained by offsetting the second starting moment forward by M-1 time domain offsets, that is, the M-1 advance starting moments are moments at which the second starting moment is advanced by M-1 time domain offsets. For example, M is equal to 5, the second starting moment is $t_1$, and the list in the first indication information is {8slot, 6slot, 4slot, 2slot}. In this case, four advance starting moments are respectively $t_1$-8slot, $t_1$-6slot, $t_1$-4slot, and $t_1$-2slot.

Implementation 2: The M starting moments include a second starting moment and M-1 delayed starting moments. In this case, the M-1 delayed starting moments are obtained by offsetting the second starting moment backward by M-1 time domain offsets, that is, the M-1 delayed starting moments are moments at which the second starting moment is delayed by M-1 time domain offsets. For example, M is equal to 5, the second starting moment is $t_1$, and the list in the first indication information is {2slot, 4slot, 6slot, 8slot}. In this case, four delayed starting moments are respectively $t_1$+2slot, $t_1$+4slot, $t_1$+6slot, and $t_1$+8slot.

Implementation 3: The M starting moments include a second starting moment, $M_1$ advance starting moments, and $M_2$ advance starting moments, where a sum of $M_1$ and $M_2$ is equal to M-1, and both $M_1$ and $M_2$ are positive integers. In this case, each of the M-1 time domain offsets included in the first indication information may further correspond to a negative sign/positive sign, to represent whether the time domain offset is used to determine the advance starting moment or the delayed starting moment. A quantity of time domain offsets corresponding to a negative sign is $M_1$, and a quantity of time domain offsets corresponding to a positive sign is $M_2$. In this case, the $M_1$ advance starting moments are obtained by offsetting the second starting moment forward by the $M_1$ time domain offsets that are corresponding to the negative sign, and the $M_2$ delayed starting moments are obtained by offsetting the second starting moment backward by the $M_2$ time domain offsets that are corresponding to the positive sign. For example, M is equal to 5, the second starting moment is $t_1$, and the list in the first indication information is {-4slot, -2slot, 2slot, 4slot}. In this case, two advance starting moments are respectively $t_1$-4slot and $t_1$-2slot, and two delayed starting moments are respectively $t_1$+2slot and $t_1$+4slot.

In Implementation 3, the manner in which a negative sign or a positive sign is used to represent whether the time domain offset is used to determine the advance starting moment or the delayed starting moment is an example manner provided in this embodiment of this application. Actually, another method may be used to represent whether the time domain offset is used to determine the advance starting moment or the delayed starting moment. For example, the first indication information may further carry one piece of information. The information indicates that first $M_1$ time domain offsets in the list are used to determine the advance starting moment, remaining $M_2$ time domain offsets are used to determine the delayed starting moment, and the like. This is not limited in this application.

In an optional implementation, when time differences between any two adjacent starting moments in the M starting moments are the same, the first indication information may include a first time difference, and the first time difference is a time difference between two adjacent starting moments in the M starting moments. The advance starting moment and/or the delayed starting moment may be determined based on the second starting moment and the first time difference.

For example, M is equal to 5, the second starting moment is $t_1$, and the first time difference included in the first indication information is 2slot. When the five starting moments include a second starting moment and four advance starting moments, the four advance starting moments are respectively $t_1$-8slot, $t_1$-6slot, $t_1$-4slot, and $t_1$-2slot. When the five starting moments include a second starting moment and four delayed starting moments, the four delayed starting moments are respectively $t_1$+2slot, $t_1$+4slot, $t_1$+6slot, and $t_1$+8slot. When the five starting moments include a second starting moment, one advance starting moment, and three delayed starting moments, four starting moments are respectively $t_1$-2slot, $t_1$+2slot, $t_1$+4slot, and $t_1$+6slot.

S102: The terminal device monitors a first signal in a monitoring window corresponding to each of the M-1 starting moments, where the first signal indicates to start the DRX on duration timer.

In an optional implementation, the first signal may be a WUS, and the monitoring window may be a WUS monitoring window. Optionally, the terminal device may determine, based on a minimum offset and a power saving offset that are corresponding to each of the M-1 starting moments, monitoring windows respectively corresponding to the M-1 starting moments. The M-1 starting moments are M-1 starting moments in the candidate M starting moments other than the latest starting moment. The minimum offset and the power saving offset that are corresponding to each starting moment may be independently determined by the terminal device and reported to the network device, or may be configured by the network device for the terminal device.

In addition, each monitoring window may include at least one valid WUS occasion. The terminal device monitors the first signal in a monitoring window corresponding to each of the M-1 starting moments, and specifically, monitors the first signal on a WUS occasion in the monitoring window corresponding to each starting moment. In addition, the terminal device may not monitor the first signal in a time other than the WUS occasion in the monitoring window, so that power consumption of the terminal device can be further reduced, and power saving effect of the terminal device can be improved.

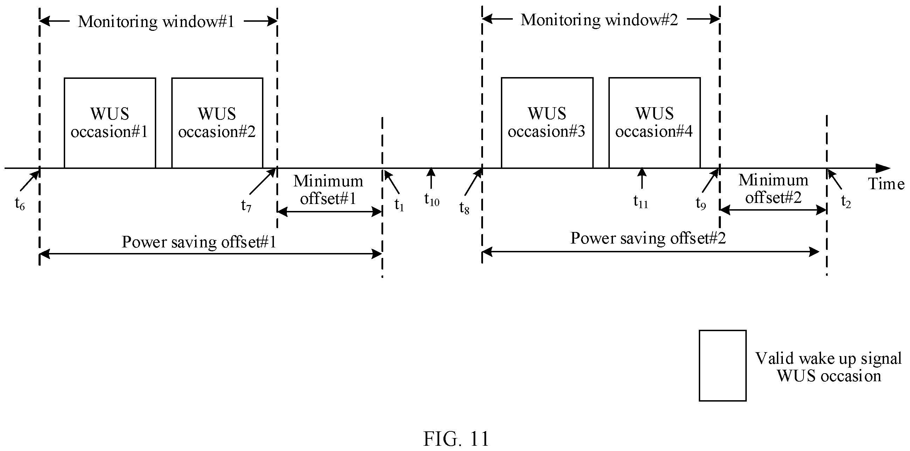

Starting moment $t_1$ and starting moment $t_2$ in FIG. 10 are used as an example. With reference to FIG. 11, starting moment $t_1$ corresponds to minimum offset#1 and power saving offset#1, and starting moment $t_2$ corresponds to minimum offset#2 and power saving offset#2. In this case, monitoring window#1 corresponding to starting moment $t_1$ is a moment (that is, $t_6$ in FIG. 11) at which $t_1$ is advanced by power saving offset#1 to a moment (that is, $t_7$ in FIG. 11) at which $t_1$ is advanced by minimum offset#1, that is, $t_6$ to $t_7$, and monitoring window#1 includes valid WUS occasion#1 and valid WUS occasion#2. Monitoring window#2 corresponding to starting moment $t_2$ is a moment (that is, $t_8$ in FIG. 11) at which $t_2$ is advanced by power saving offset#2 to a moment (that is, $t_9$ in FIG. 11) at which $t_2$ is advanced by minimum offset#2, that is, $t_8$ to $t_9$, and monitoring window#2 includes valid WUS occasion#3 and valid WUS occasion#4.

Optionally, in the M-1 starting moments with corresponding monitoring windows, minimum offsets corresponding to different starting moments may be the same or different, and power saving offsets corresponding to different starting moments may be the same or different. In an optional manner, M is greater than 2. When different starting moments correspond to a same minimum offset and a same power saving offset, the terminal device may independently determine a minimum offset and a power saving offset, or the network device may configure a minimum offset and a power saving offset for the terminal device. In this case, the terminal device may determine, based on the minimum offset and the power saving offset, a monitoring window corresponding to each of the M-1 starting moments. In this case, duration of monitoring windows corresponding to all starting moments is the same.

S103: The network device sends the first signal in a monitoring window corresponding to a first starting moment, where the first starting moment is one of the M-1 starting moments. Correspondingly, the terminal device obtains, through monitoring, the first signal in the monitoring window corresponding to the first starting moment.

The first signal may be sent by the network device to the terminal device after receiving service data from a core network device. The first starting moment may be a starting moment that is in the M-1 starting moments and that is later than a service data receiving moment and closest to the service data receiving moment.

In an optional implementation, when the M starting moments include a second starting moment, and an advance starting moment earlier than the second starting moment and/or a delayed starting moment later than the second starting moment, the first starting moment is one of the second starting moment, the advance starting moment, and the delayed starting moment, which may be specifically determined based on a moment at which the network device receives the service data from the core network device, or may be determined based on a starting moment corresponding to the monitoring window at which the terminal device obtains the first signal through monitoring.

For example, if the terminal device receives the first signal in a monitoring window corresponding to the second starting moment, the first starting moment is the second starting moment. If the terminal device receives the first signal in a monitoring window corresponding to an advance starting moment, the first starting moment is the advance starting moment. If the terminal device receives the first signal in a monitoring window corresponding to a delayed starting moment, the first starting moment is the delayed starting moment.

In an optional implementation, the service data may be data of an XR service. Before the network device sends the first indication information, the method may further include: The network device receives characteristic information of the XR service from the core network device, where the characteristic information of the XR service may include a jitter range and/or a frame rate option set of the XR service. The network device determines the M starting moments based on the jitter range. For example, the jitter range is [-4 ms, 4 ms], and the network device may determine eight starting moments. The eight starting moments may be evenly distributed, at an interval of 1 ms, in the range with a difference of [-4 ms, 4 ms] from an ideal arrival time; and/or the network device determines the DRX cycle based on the frame rate option set. For example, the frame rate option set includes 60 fps, 90 fps, and 120 fps, and it indicates that a frame rate of the XR service may be dynamically adjusted among the three frame rates, and the determined DRX cycle may be dynamically adjusted among three values:

$$\frac{1}{60\ fps} \approx 16.67\ ms$$

,

$$\frac{1}{90\ fps} \approx 11.11\ ms$$

, and

$$\frac{1}{120\ fps} \approx 8.33\ ms$$

.

In this implementation, the configured M starting moments and the DRX cycle can be applicable to the XR service having the foregoing characteristics, and reliability of the M starting moments and the DRX cycle is improved.

Optionally, when the network device is in an architecture in which a DU is separated from a CU, that the network device receives characteristic information of the XR service from the core network device may include:

The CU receives the characteristic information of the XR service from the core network device, and sends the characteristic information of the XR service to the DU. That the network device determines the M starting moments based on the jitter range may include: The DU determines the M starting moments based on a jitter range in the received characteristic information of the XR service. That the network device determines the DRX cycle based on the frame rate option set may include: The DU determines the DRX cycle based on the frame rate option set.

In addition, the first indication information may be carried in RRC signaling. In this case, after determining the M starting moments, the DU may further send, to the CU, the first indication information indicating the M starting moments, and the CU encapsulates the first indication information in the RRC signaling and delivers the RRC signaling to the terminal device.

S104: The terminal device starts the DRX on duration timer at the first starting moment.

For example, with reference to FIG. 10, if the network device receives the service data from the core network device in monitoring window#2, the network device sends the first signal to the terminal device in monitoring window#2. Correspondingly, the terminal device may receive the first signal from the network device in monitoring window#2, and the terminal device may start the DRX on duration timer at $t_2$.

Optionally, when the monitoring window is a WUS monitoring window, and the first signal is a WUS, if the network device detects, at a moment, that service data arrives, the network device may send the first signal to the terminal device on a WUS occasion closest to the moment, and an end time of a WUS occasion closest to the moment is later than the moment. For example, with reference to FIG. 11, if the network device detects, at $t_{10}$, that service data from the core network device arrives, the network device may send the first signal to the terminal device on WUS occasion#3. If the network device detects, at $t_{11}$, that service data from the core network device arrives, the network device may send the first signal to the terminal device on WUS occasion#4.

In an optional implementation, the method may further include: The terminal device skips a monitoring window corresponding to a remaining starting moment in the M-1 starting moments, where the remaining starting moment is a starting moment that is in the M-1 starting moments and that is later than the first starting moment. In other words, the terminal device may not perform monitoring in the monitoring window corresponding to the remaining starting moment in the M-1 starting moments, thereby further reducing power consumption of the terminal device. For example, with reference to FIG. 10, if the terminal device receives the first signal from the network device in monitoring window#2, the terminal device may start the DRX on duration timer at $t_2$, and skip monitoring window#3 corresponding to starting moment $t_3$ and monitoring window#4 corresponding to start-

ing moment $t_4$.

In an optional implementation, the method may further include: If the terminal device obtains, through monitoring, no first signal in monitoring windows respectively corresponding to the M-1 starting moments, the terminal device starts the DRX on duration timer at the latest starting moment in the M starting moments. In this implementation, it can be ensured that the terminal device definitely starts the DRX on duration timer in each DRX cycle to receive periodic service data, thereby avoiding a case in which the service data cannot be sent to the terminal device in time because the terminal device does not start the DRX on duration timer, which causes service data timeout and affects terminal service experience. For example, with reference to FIG. 10, if the terminal device obtains, through monitoring, no first signal in monitoring window#1 to monitoring window#4, the terminal device starts the DRX on duration timer at the latest starting moment (namely, $t_5$ in FIG. 10).

In an optional implementation, the method may further include: The network device sends a second signal in a monitoring window corresponding to a third starting moment; and correspondingly, if the terminal device receives the second signal in the monitoring window corresponding to the third starting moment, the terminal device does not start the DRX on duration timer at the third starting moment and N starting moments. The second signal indicates not to start the DRX on duration timer at the N starting moments, the third starting moment is one of M-1 starting moments, the N starting moments are N consecutive starting moments that are in the M-1 starting moments and that are later than the third starting moment, and N is a positive integer less than M-1. This implementation may be applied to a case in which the network device predicts that no service data from the core network device arrives in a time period, and the network device may indicate, by using the second signal, the terminal device to skip some starting moments.

In addition, when the network device detects, in the monitoring window corresponding to the first starting moment, that the service data arrives, the third starting moment is earlier than the first starting moment, and an operation of sending the second signal by the network device in the monitoring window corresponding to the third starting moment is performed before the network device sends the first signal. When the network device detects, in the monitoring windows corresponding to the M-1 starting moments, that no service data arrives, the third starting moment is a starting moment in the M-1 starting moments other than the latest starting moment.

Specifically, if the network device predicts, before the third starting moment, that no service data from the core network device arrives in a time period, the network device may send the second signal in the monitoring window corresponding to the third starting moment, to indicate the terminal device to skip some starting moments. After the predicted time period, if the network device detects, in the monitoring window corresponding to the first starting moment, that the service data arrives, the network device sends the first signal in the monitoring window corresponding to the first starting moment, to indicate the terminal device to start the DRX on duration timer at the first starting moment. If the network device detects, even at the latest starting moment in the M-1 starting moments, that no service data arrives, the network device does not send the first signal. In other words, the terminal device receives no first signal in the monitoring windows corresponding to the M-1 starting moments. In this case, the terminal device starts the DRX on duration timer at the latest starting moment in the M starting moments.

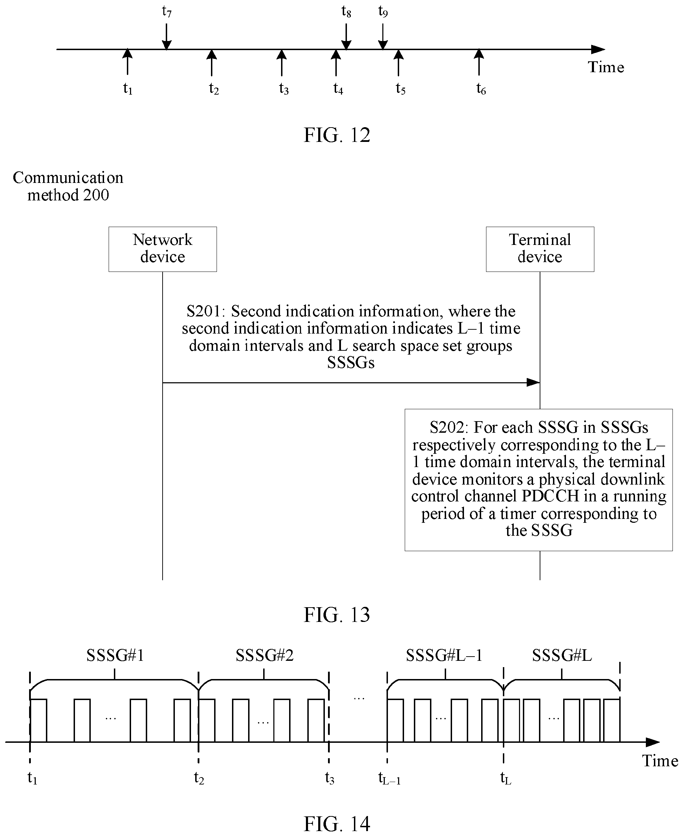

For example, with reference to FIG. 12, M is equal to 6, and candidate six starting moments that are of the DRX on duration timer and that are indicated by the first indication information include $t_1$, $t_2$, $t_3$, $t_4$, $t_5$, and $t_6$. If the network device predicts, at $t_7$, that no service data from the core network device arrives in a time period from $t_7$ to $t_8$, the network device may send a second signal to the terminal device in a monitoring window corresponding to $t_2$, where the second signal indicates the terminal device not to start the DRX on duration timer at two starting moments. In this case, after receiving the second signal in the monitoring window corresponding to $t_2$, the terminal device does not start the DRX on duration timer at $t_2$, $t_3$, and $t_4$.

The network device continues to detect, after $t_8$, whether service data arrives. If detecting, at $t_9$, that the service data arrives, the network device may send a first signal to the terminal device in a monitoring window corresponding to $t_5$, and the terminal device starts the DRX on duration timer at $t_5$. If the network device detects no arrival of the service data in a time period from $t_8$ to $t_5$, the network device does not send the first signal to the terminal device before $t_5$. In other words, the terminal device receives no first signal in monitoring windows respectively corresponding to $t_1$, $t_2$, $t_3$, $t_4$, and $t_5$, and the terminal device may start the DRX on duration timer at $t_6$.

Optionally, the method may further include: The terminal device skips monitoring windows respectively corresponding to the N starting moments, that is, the terminal device may not perform monitoring on the monitoring windows respectively corresponding to the N starting moments. This implementation can further reduce a power loss of the terminal device, and improve power saving effect of the terminal device.

In conclusion, in the communication method 100, the network device sends first indication information, where the first indication information indicates candidate M starting moments of the DRX on duration timer, each of M-1 starting moments in the M starting moments other than a latest starting moment is corresponding to one monitoring window, and M is an integer greater than or equal to 2. The terminal device monitors a first signal in a monitoring window corresponding to each of the M-1 starting moments, where the first signal indicates to start the DRX on duration timer. The network device sends the first signal in the monitoring window corresponding to the first starting moment, where the first starting moment is one of the M-1 starting moments. The terminal device obtains, through monitoring, the first signal in the monitoring window corresponding to the first starting moment, and starts the DRX on duration timer at the first starting moment.

It can be learned that there are a plurality of candidate starting moments of the DRX on duration timer. The network device may indicate, by using the first signal, a starting moment at which the terminal device starts the DRX on duration timer. Correspondingly, the terminal device may determine, by monitoring the first signal, the starting moment at which the DRX on duration timer is started. The first signal may be sent by the network device to the terminal device when the network device detects that the service data from the core network device arrives. It can be learned that the network device may match the starting moment of the DRX on duration timer based on an actual arrival time of the service data. In this way, a running time of the DRX on duration timer does not need to cover an entire jitter range, thereby reducing a time at which the terminal device is in a DRX active state, and improving power saving effect of the terminal device.

FIG. 13 is a schematic flowchart of a communication method 200 according to an embodiment of this application. The communication method 200 is described from a perspective of interaction between a network device and a terminal device. This embodiment may be performed by the terminal device and the network device, or may be performed by a component (for example, a processor, a chip, or a chip system) of the terminal device and the network device. The communication method 200 includes the following steps.

S201: The network device sends second indication information, where the second indication information indicates L-1 time domain intervals and L SSSGs; and correspondingly, the terminal device receives the second indication information. The L-1 time domain intervals are in one-to-one correspondence with L-1 SSSGs in the L SSSGs, distribution densities of PDCCH monitoring occasions separately configured for the L SSSGs are different, and L is an integer greater than 1.

For example, with reference to FIG. 14, the L-1 time domain intervals indicated by the second indication information are $[t_1, t_2]$, $[t_2, t_3]$, ..., and $[t_{L-1}, t_L]$, where $[t_1, t_2]$, $[t_2, t_3]$, ..., and $[t_{L-1}, t_L]$ are in one-to-one correspondence with SSSG#1, SSSG#2, ..., and SSSG#L-1.

In an optional implementation, a start moment of a foremost time domain interval in the L-1 time domain intervals is the same as a starting moment of a DRX on duration timer. For example, with reference to FIG. 14, the foremost time domain interval in the L-1 time domain intervals is $[t_1, t_2]$, and $t_1$ is also the starting moment of the DRX on duration timer.

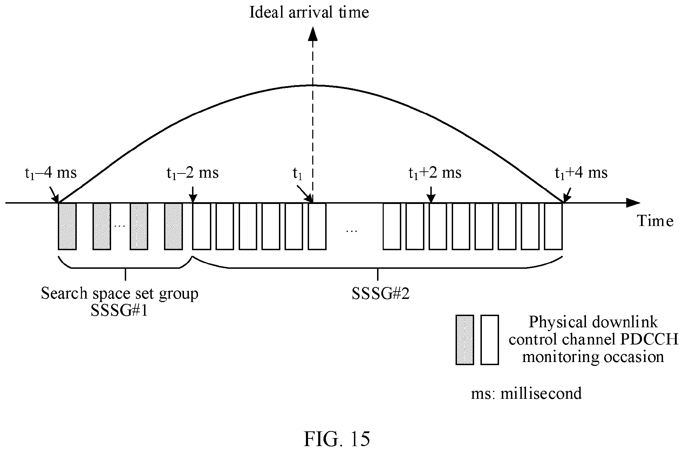

In an optional implementation, the L-1 time domain intervals and the L SSSGs are determined by the network device based on a probability distribution that an arrival time of service data from a core network device complies with. For example, with reference to FIG. 15, the probability distribution that the arrival time of the service data complies with is a truncated Gaussian distribution, and a truncation range is [-4 ms, 4 ms]. A probability that the service data arrives at a time with a difference of -2 ms to 2 ms from an ideal arrival time $t_1$ is large, and a probability that the service data arrives at a time with a difference of -4 ms to -2 ms from the ideal arrival time $t_1$ is small. In this case, a density of PDCCH monitoring occasions configured for SSSG#1 corresponding to a time domain interval $[t_1$-4 ms, $t_1$-2 ms] is high, and a density of PDCCH monitoring occasions configured for SSSG#2 corresponding to a time domain interval $[t_1$-2 ms, $t_1$+4 ms] is low.

In an optional implementation, the service data is data of an XR service. Before the network device sends the second indication information, the method may further include: The network device receives characteristic information of an XR service from the core network device, where the characteristic information of the XR service includes one or more of the following: a jitter range of the XR service, the probability distribution that the arrival time of the service data complies with, and a frame rate option set. The network device determines the L-1 time domain intervals and the L SSSGs based on the jitter range and/or the probability distribution; and/or the network device determines a DRX cycle based on the frame rate option set. In this implementation, the configured L-1 time domain intervals, L SSSGs, and DRX cycle can be applicable to an XR service having the foregoing characteristics, and reliability of the L-1 time domain intervals, the L SSSGs, and the DRX cycle is improved. For specific descriptions, refer to the foregoing related descriptions. Details are not described herein again.

Optionally, when the network device is in an architecture in which a DU is separated from a CU, that the network device receives characteristic information of the XR service from the core network device may include: The CU receives the characteristic information of the XR service from the core network device, and sends the characteristic information of the XR service to the DU. That the network device determines the L-1 time domain intervals and the L SSSGs based on the jitter range and/or the probability distribution may include: The DU determines the L-1 time domain intervals and the L SSSGs based on the jitter range and/or the probability distribution. That the network device determines the DRX cycle based on the frame rate option set may include: The DU determines the DRX cycle based on the frame rate option set.

In addition, the second indication information may be carried in RRC signaling. In this case, after determining the L-1 time domain intervals and the L SSSGs, the DU may further send, to the CU, the second indication information indicating the L-1 time domain intervals and the L SSSGs, and the CU encapsulates the second indication information in the RRC signaling and delivers the RRC signaling to the terminal device.

S202: For each SSSG in the SSSGs respectively corresponding to the L-1 time domain intervals, the terminal device monitors a PDCCH in a running period of a timer corresponding to the SSSG. A starting moment of a timer corresponding to each SSSG is a start moment of a time domain interval corresponding to the SSSG, timing duration is duration of the time domain interval corresponding to the SSSG, and an expiration moment is an end moment of the time domain interval corresponding to the SSSG. In addition, the timer corresponding to the SSSG may also be referred to as an SSSG switching timer (SSSG switching Timer).

For example, with reference to FIG. 14, a time domain interval corresponding to SSSG#1 is $[t_1, t_2]$. In this case, a starting moment of a timer corresponding to SSSG#1 is $t_1$, timing duration is $t_2$ to $t_1$, and an expiration moment is $t_2$. In addition, starting moments, timing duration, and expiration moments of timers respectively corresponding to SSSG#2, ..., and SSSG#L-1 are similar to those of SSSG#1. Details are not described again.

In an optional implementation, the method may further include: If a PDCCH is obtained through monitoring on a PDCCH monitoring occasion configured for one SSSG in the SSSGs respectively corresponding to the L-1 time domain intervals, the terminal device stops a timer corresponding to the SSSG. If no PDCCH is obtained through monitoring on the PDCCH monitoring occasion configured for the SSSG, and the timer corresponding to the SSSG expires, the terminal device monitors the PDCCH on a PDCCH monitoring occasion configured for a next SSSG of the SSSG. If an SSSG is corresponding to a time domain interval in the L-1 time domain intervals other than a latest time domain interval, a time domain interval corresponding to a next SSSG of the SSSG is closest to the time domain interval corresponding to the SSSG, and is located after the time domain interval corresponding to the SSSG. If an SSSG is corresponding to the latest time domain interval in the L-1 time domain intervals, a next SSSG of the SSSG is an SSSG that is in the L SSSGs and that does not have a corresponding time domain interval.

For example, with reference to FIG. 14, the time domain interval corresponding to SSSG#2 is closest to the time domain interval of SSSG#1, and is located after the time domain interval of SSSG#1. Therefore, a next SSSG of SSSG#1 is SSSG#2, and a next SSSG of any SSSG from SSSG#2 to SSSG#L-2 is similar to that of SSSG#2. Details are not described again. In addition, SSSG#L-1 is an SSSG corresponding to the latest time domain interval in the L-1 time domain intervals, and a next SSSG of SSSG#L-1 is SSSG#L.

The following describes this implementation by using an example in which L is equal to 2. If a PDCCH is obtained through monitoring on a PDCCH monitoring occasion configured for a first SSSG, a timer corresponding to the first SSSG is stopped. The first SSSG is an SSSG that is corresponding to a time domain interval indicated by the second indication information and that is in two SSSGs. If no PDCCH is obtained through monitoring on the PDCCH monitoring occasion configured for the first SSSG, and the timer corresponding to the first SSSG expires, the PDCCH is monitored on a PDCCH monitoring occasion configured for a second SSSG, where the second SSSG is an SSSG in the two SSSGs other than the first SSSG.

For example, with reference to FIG. 15, L is equal to 2, and the second indication information indicates one time domain interval $[t_1-4 \text{ ms}, t_1-2 \text{ ms}]$, SSSG#1, and SSSG#2, where the time domain interval $[t_1-4 \text{ ms}, t_1-2 \text{ ms}]$ corresponds to SSSG#1. In this case, the first SSSG is SSSG#1, the second SSSG is SSSG#2, a starting moment of the timer corresponding to SSSG#1 is $t_1-4 \text{ ms}$, timing duration is 2 ms, and an end moment is $t_1-2 \text{ ms}$. If the terminal device obtains, through monitoring, the PDCCH on the PDCCH monitoring occasion configured for SSSG#1, the terminal device stops the timer corresponding to SSSG#1. If the terminal device obtains no PDCCH through monitoring on the PDCCH monitoring occasion configured for SSSG#1, and the timer corresponding to SSSG#1 expires, the terminal device monitors the PDCCH on the PDCCH monitoring occasion configured for SSSG#2.

In conclusion, in the communication method 200, the network device sends the second indication information, where the second indication information indicates the L-1 time domain intervals and the L SSSGs, the L-1 time domain intervals are in one-to-one correspondence with the L-1 SSSGs in the L SSSGs, L is an integer greater than 1, and the distribution densities of PDCCH monitoring occasions separately configured for the L SSSGs are different. For each SSSG in the SSSGs respectively corresponding to the L-1 time domain intervals, the terminal device monitors a PDCCH in a running period of a timer corresponding to the SSSG, where a starting moment of a timer corresponding to each SSSG is a start moment of a time domain interval corresponding to the SSSG, timing duration is duration of the time domain interval corresponding to the SSSG, and an expiration moment is an end moment of the time domain interval corresponding to the SSSG.

It can be learned that the network device configures, for the terminal device, SSSGs used in all time domain intervals, and the terminal device may determine a timer corresponding to each SSSG. In this way, the terminal device monitors the PDCCH in a running period of the timer corresponding to each SSSG, and may automatically switch to a next SSSG for monitoring after the timer expires. Compared with a manner in which the network device sends, to the terminal device only at a moment at which the network device expects the terminal device to perform SSSG switching, a signal indicating to perform SSSG switching, and the terminal device performs switching after receiving the signal, this manner is more flexible, and signaling overheads are less.

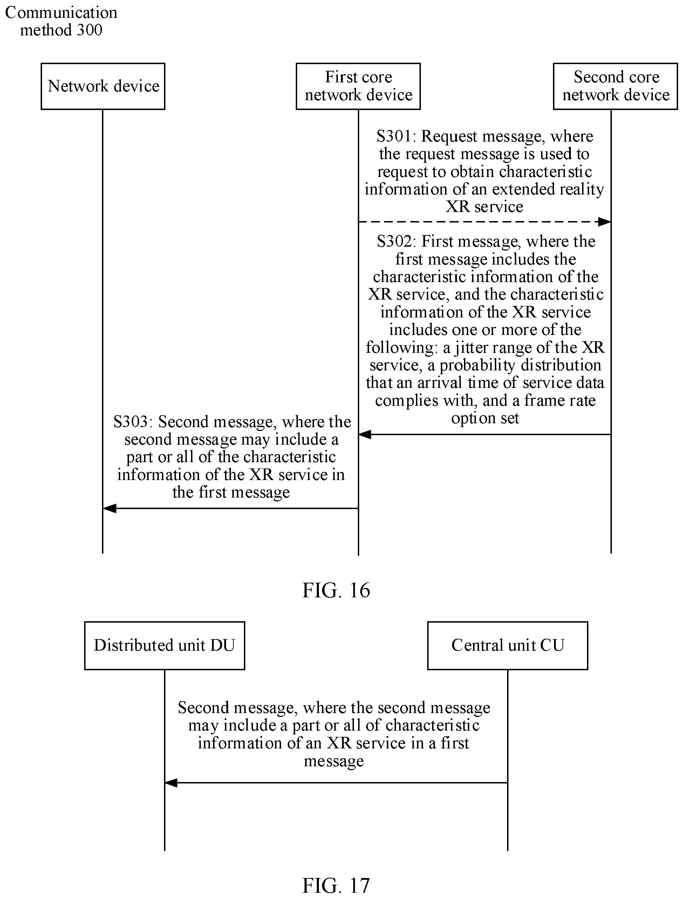

In this embodiment of this application, the characteristic information of the XR service may be obtained by the network device from a core network. An embodiment of this application further provides a communication method 300. The communication method 300 is a method in which a network device obtains characteristic information of an XR service from a core network, as shown in FIG. 16. This embodiment may be executed by a network device, a first core network device, and a second core network device, or may be executed by components (for example, a processor, a chip, or a chip system) of the network device, the first core network device, and the second core network device. The communication method 300 includes the following steps.

S301: The first core network device sends a request message to the second core network device, where the request message is used to request to obtain the characteristic information of the XR service, and correspondingly, the second core network device receives the request message from the first core network device. This step is an optional step. Actually, the communication method 300 may not include step S301.

S302: The second core network device sends a first message to the first core network device, where the first message includes the characteristic information of the XR service, and the characteristic information of the XR service includes one or more of the following: a jitter range of the XR service, a probability distribution that an arrival time of service data complies with, and a frame rate option set. Correspondingly, the first core network device receives the first message from the second core network device. The first core network device may be an AMF entity, and the second core network device may be an AF entity or a UDM entity.

For specific descriptions of the jitter range of the XR service, the probability distribution that the arrival time of the service data complies with, and the frame rate option set, refer to the foregoing related descriptions. Details are not described herein again.

S303: The second core network device sends a second message to the network device, where the second message may include a part or all of the characteristic information of the XR service in the first message, and correspondingly, the network device receives the second message from the second core network device.

In an optional manner, when the network device is in an architecture in which a CU is separated from a DU, with reference to FIG. 17, that the network device receives the second message from the second core network device in step S303 may include: The CU receives the second message from the second core network device, and sends the second message to the DU, and correspondingly, the DU receives the second message from the CU.

To implement functions in the method provided in the foregoing embodiments of this application, the network device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

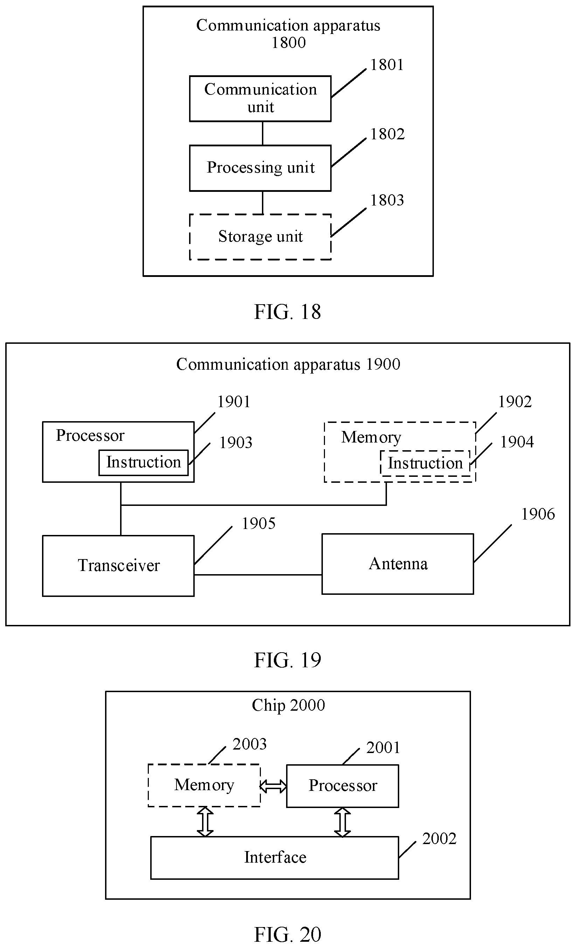

As shown in FIG. 18, an embodiment of this application provides a communication apparatus 1800. The communication apparatus 1800 may be a component (for example, an integrated circuit or a chip) of a network device, or may be a component (for example, an integrated circuit or a chip) of a terminal device. Alternatively, the communication apparatus 1800 may be another communication unit, configured to implement the methods in the method embodiments of this application. The communication apparatus 1800 may include a communication unit 1801 and a processing unit 1802. The processing unit 1802 is configured to control the communication unit 1801 to perform data/signaling receiving and sending. Optionally, the communication apparatus 1800 may further include a storage unit 1803.

In a possible design, the communication unit 1801 is configured to receive first indication information, where the first indication information indicates candidate M starting moments of a DRX on duration timer, each of M-1 starting moments in the M starting moments other than a latest starting moment is corresponding to one monitoring window, and M is an integer greater than or equal to 2.

The processing unit 1802 is configured to monitor a first signal in a monitoring window corresponding to each of the M-1 starting moments, where the first signal indicates to start the DRX on duration timer.

The processing unit 1802 is further configured to: if the first signal is obtained through monitoring in a monitoring window corresponding to a first starting moment, the DRX on duration timer is started at the first starting moment, where the first starting moment is one of the M-1 starting moments.

In an optional implementation, the processing unit 1802 is further configured to: if no first signal is obtained through monitoring in monitoring windows respectively corresponding to the M-1 starting moments, the DRX on duration timer is started at the latest starting moment in the M starting moments.

In an optional implementation, the processing unit 1802 is further configured to skip a monitoring window corresponding to a remaining starting moment in the M-1 starting moments, where the remaining starting moment is a starting moment that is in the M-1 starting moments and that is later than the first starting moment.

In an optional implementation, the M starting moments include a second starting moment, and an advance starting moment earlier than the second starting moment and/or a delayed starting moment later than the second starting moment; and the second starting moment is obtained by offsetting a DRX start moment of a DRX cycle backward by a DRX delay.

Optionally, the first indication information includes M-1 time domain offsets, and the advance starting moment and/or the delayed starting moment are/is obtained based on the M-1 time domain offsets.

In an optional implementation, if a second signal is received in a monitoring window corresponding to a third starting moment, the DRX on duration timer is not started at the third starting moment and N starting moments, and the second signal indicates not to start the DRX on duration timer at the N starting moments.

The third starting moment is one of the M-1 starting moments, the N starting moments are N consecutive starting moments that are in the M-1 starting moments and that are later than the third starting moment, and N is a positive integer less than M-1.

Optionally, the processing unit 1802 is further configured to skip monitoring windows respectively corresponding to the N starting moments.

In another possible design, the communication unit 1801 is configured to send first indication information, where the first indication information indicates candidate M starting moments of a DRX on duration timer, each of M-1 starting moments in the M starting moments other than a latest starting moment is corresponding to one monitoring window, and M is an integer greater than or equal to 2.

The communication unit 1801 is further configured to send a first signal in a monitoring window corresponding to a first starting moment, where the first signal indicates to start the DRX on duration timer, and the first starting moment is one of the M-1 starting moments.

In an optional implementation, the M-1 starting moments include a second starting moment, and an advance starting moment earlier than the second starting moment and/or a delayed starting moment later than the second starting moment; and the second starting moment is obtained by offsetting a DRX start moment of a DRX cycle backward by a DRX delay.

Optionally, the first indication information includes M-1 time domain offsets, and the advance starting moment and/or the delayed starting moment are/is obtained based on the M-1 time domain offsets.

In an optional implementation, the communication unit 1801 is further configured to send a second signal in a monitoring window corresponding to a third starting moment, where the second signal indicates not to start the DRX on duration timer at N starting moments.

The third starting moment is one of the M-1 starting moments, the N starting moments are N consecutive starting moments that are in the M-1 starting moments and that are later than the third starting moment, and N is a positive integer less than M-1.

In an optional implementation, service data is data of an XR service. The communication unit 1801 is further configured to: before sending the first indication information, receive characteristic information of the XR service from a core network device, where the characteristic information of the XR service includes a jitter range and/or a frame rate option set of the XR service.

The processing unit 1802 is configured to determine the M starting moments based on the jitter range; and/or the processing unit 1802 is configured to determine the DRX cycle based on the frame rate option set.

In an optional implementation, the communication apparatus 1800 is an architecture in which a DU is separated from a CU.

That the communication unit 1801 receives characteristic information of the XR service from a core network device is specifically: receiving, by using the CU, the characteristic information of the XR service from the core network device, and sending the characteristic information of the XR service to the DU.

That the processing unit 1802 determines the M starting moments based on the jitter range is specifically: determining, by using the DU, the M starting moments based on the jitter range.

That the processing unit 1802 determines the DRX cycle based on the frame rate option set is specifically: determining, by using the DU, the DRX cycle based on the frame rate option set.

This embodiment of this application and the foregoing communication method 100 are based on a same concept, and bring same technical effect. For a specific principle, refer to the descriptions of the foregoing embodiments. Details are not described again.

In another possible design, the communication unit 1801 is configured to receive second indication information, where the second indication information indicates L-1 time domain intervals and L SSSGs, the L-1 time domain intervals are in one-to-one correspondence with L-1 SSSGs in the L SSSGs, distribution densities of PDCCH monitoring occasions separately configured for the L SSSGs are different, and L is an integer greater than 1.

The processing unit 1802 is configured to: for each SSSG in the SSSGs respectively corresponding to the L-1 time domain intervals, a PDCCH is monitored in a running period of a timer corresponding to the SSSG, where a starting moment of a timer corresponding to each SSSG is a start moment of a time domain interval corresponding to the SSSG, timing duration is duration of the time domain interval corresponding to the SSSG, and an expiration moment is an end moment of the time domain interval corresponding to the SSSG.

In an optional implementation, L is equal to 2. The processing unit 1802 is further configured to: if a PDCCH is obtained through monitoring on a PDCCH monitoring occasion configured for a first SSSG, a timer corresponding to the first SSSG is stopped. The first SSSG is an SSSG that is corresponding to a time domain interval indicated by the second indication information and that is in two SSSGs.

The processing unit 1802 is further configured to: if no PDCCH is obtained through monitoring on the PDCCH monitoring occasion configured for the first SSSG, and the timer corresponding to the first SSSG expires, the PDCCH is monitored on a PDCCH monitoring occasion configured for a second SSSG, where the second SSSG is an SSSG in the two SSSGs other than the first SSSG.

In an optional implementation, a start moment of a foremost time domain interval in the L-1 time domain intervals is the same as a starting moment of a discontinuous reception DRX on duration timer.

In another possible design, the communication unit 1801 is configured to send second indication information, where the second indication information indicates L-1 time domain intervals and L SSSGs, the L-1 time domain intervals are in one-to-one correspondence with L-1 SSSGs in the L SSSGs, L is an integer greater than 1, and distribution densities of physical downlink control channel PDCCH monitoring occasions separately configured for the L SSSGs are different.

In an optional implementation, a start moment of a foremost time domain interval in the L-1 time domain intervals is the same as a starting moment of a discontinuous reception DRX on duration timer.

In an optional implementation, the L-1 time domain intervals and the L SSSGs are determined based on a probability distribution that an arrival time of service data from a core network device complies with.

In an optional implementation, service data is data of an XR service.

The communication unit 1801 is further configured to: before sending the second indication information, receive characteristic information of an XR service from the core network device, where the characteristic information of the XR service includes one or more of the following: a jitter range of the XR service, the probability distribution that the arrival time of the service data complies with, and a frame rate option set.

The processing unit 1802 is configured to determine the L-1 time domain intervals and the L SSSGs based on the jitter range and/or the probability distribution; and/or the processing unit 1802 is configured to determine the DRX cycle based on the frame rate option set.

Optionally, the communication apparatus 1800 is an architecture in which a DU is separated from a CU.

That the communication unit 1801 receives characteristic information of the XR service from a core network device is specifically: receiving, by using the CU, the characteristic information of the XR service from the core network device, and sending the characteristic information of the XR service to the DU.

That the processing unit 1802 determines the L-1 time domain intervals and the L SSSGs based on the jitter range and the probability distribution is specifically: determining, by using the DU, the L-1 time domain intervals and the L SSSGs based on the jitter range and/or the probability distribution.

That the processing unit 1802 determines the DRX cycle based on the frame rate option set is specifically: determining, by using the DU, the DRX cycle based on the frame rate option set.

This embodiment of this application and the foregoing communication method 200 are based on a same concept, and bring same technical effect. For a specific principle, refer to the descriptions of the foregoing embodiments. Details are not described again.

An embodiment of this application further provides a communication apparatus 1900, as shown in FIG. 19. The communication apparatus 1900 may be a network device or a terminal device, may be a chip, a chip system, a processor, or the like that supports the network device in implementing the foregoing methods, or may be a chip, a chip system, a processor, or the like that supports the terminal device in implementing the foregoing methods. The apparatus may be configured to implement the methods described in the foregoing method embodiments. For details, refer to the descriptions in the foregoing method embodiments.

The communication apparatus 1900 may include one or more processors 1901. The processor may be configured to implement some or all functions of the network device or the terminal device by using a logic circuit or by running a computer program. The processor 1901 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (Central Processing Unit, CPU). The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1900 may include one or more memories 1902. The memory may store instructions 1904. The instructions may be run on the processor 1901, to enable the communication apparatus 1900 to perform the method described in the foregoing method embodiments. Optionally, the memory 1902 may further store data. The processor 1901 and the memory 1902 may be separately disposed, or may be integrated together.

The memory 1902 may include but is not limited to a non-volatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM or a compact disc read-only memory (compact disc read-only memory, CD-ROM), or the like.

Optionally, the communication apparatus 1900 may further include a transceiver 1905 and an antenna 1906. The transceiver 1905 may be referred to as a transceiver unit, a transceiver machine, a transceiver circuit, or the like, and is configured to implement a transceiver function. The transceiver 1905 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The communication apparatus 1900 is a network device. The transceiver 1905 is configured to perform S101 and S103 in FIG. 9, and is configured to perform S201 in FIG. 13.

The communication apparatus 1900 is a terminal device. The transceiver 1905 is configured to perform S101 and S103 in FIG. 9, and is configured to perform S201 in FIG. 13. The processor 1901 is configured to perform S102 and S104 in FIG. 9, and is configured to perform S202 in FIG. 13.

In another possible design, the processor 1901 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1901 may store instructions 1903. When the instructions 1903 are run on the processor 1901, the communication apparatus 1900 may be enabled to perform the method described in the foregoing method embodiments. The instructions 1903 may be fixed in the processor 1901. In this case, the processor 1901 may be implemented by using hardware.

In still another possible design, the communication apparatus 1900 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

The communication apparatus described in the foregoing embodiments may be a network device or a terminal device. However, a scope of the communication apparatus described in embodiments of this application is not limited thereto, and a structure of the communication apparatus may not be limited by FIG. 19. The communication apparatus may be an independent device or may be a part of a large device. For example, the communication apparatus may be:

(1) an independent integrated circuit IC, a chip, or a chip system or subsystem;
(2) a set that has one or more ICs, where optionally, the IC set may alternatively include a storage component configured to store data and an instruction;
(3) an ASIC, like a modem (modulator);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

For a case in which the communication apparatus may be a chip or a chip system, refer to a diagram of a structure of a chip shown in FIG. 20. The chip 2000 shown in FIG. 20 includes a processor 2001 and an interface 2002. There may be one or more processors 2001, and there may be a plurality of interfaces 2002. The processor 2001 may be a logic circuit, and the interface 2002 may be an input/output interface, an input interface, or an output interface. The chip 2000 may further include a memory 2003.

In a design, when the chip is configured to implement a function of the terminal device in embodiments of this application:

in a manner, the interface 2002 is configured to receive first indication information, where the first indication information indicates candidate M starting moments of a discontinuous reception DRX on duration timer, each of M-1 starting moments in the M starting moments other than a latest starting moment is corresponding to one monitoring window, and M is an integer greater than or equal to 2.

The processor 2001 is configured to monitor a first signal in a monitoring window corresponding to each of the M-1 starting moments, where the first signal indicates to start the DRX on duration timer.

The processor 2001 is further configured to: if the first signal is obtained through monitoring in a monitoring window corresponding to a first starting moment, the DRX on duration timer is started at the first starting moment, where the first starting moment is one of the M-1 starting moments.

In an optional implementation, the processor 2001 is further configured to: if no first signal is obtained through monitoring in monitoring windows respectively corresponding to the M-1 starting moments, the DRX on duration timer is started at the latest starting moment in the M starting moments.

In an optional implementation, the processor 2001 is further configured to skip a monitoring window corresponding to a remaining starting moment in the M-1 starting moments, where the remaining starting moment is a starting moment that is in the M-1 starting moments and that is later than the first starting moment.

In an optional implementation, the M starting moments include a second starting moment, and an advance starting moment earlier than the second starting moment and/or a delayed starting moment later than the second starting moment; and the second starting moment is obtained by offsetting a DRX start moment of a DRX cycle backward by a DRX delay.

Optionally, the first indication information includes M-1 time domain offsets, and the advance starting moment and/or the delayed starting moment are/is obtained based on the M-1 time domain offsets.

In an optional implementation, if a second signal is received in a monitoring window corresponding to a third starting moment, the DRX on duration timer is not started at the third starting moment and N starting moments, and the second signal indicates not to start the DRX on duration timer at the N starting moments.

The third starting moment is one of the M-1 starting moments, the N starting moments are N consecutive starting moments that are in the M-1 starting moments and that are later than the third starting moment, and N is a positive integer less than M-1.

Optionally, the processor 2001 is further configured to skip monitoring windows respectively corresponding to the N starting moments.

In another manner, the interface 2002 is configured to receive second indication information, where the second indication information indicates L-1 time domain intervals and L SSSGs, the L-1 time domain intervals are in one-to-one correspondence with L-1 SSSGs in the L SSSGs, distribution densities of physical downlink control channel PDCCH monitoring occasions separately configured for the L SSSGs are different, and L is an integer greater than 1.

The processor 2001 is configured to: for each SSSG in the SSSGs respectively corresponding to the L-1 time domain intervals, a PDCCH is monitored in a running period of a timer corresponding to the SSSG, where a starting moment of a timer corresponding to each SSSG is a start moment of a time domain interval corresponding to the SSSG, timing duration is duration of the time domain interval corresponding to the SSSG, and an expiration moment is an end moment of the time domain interval corresponding to the SSSG.

In an optional implementation, L is equal to 2. The processor 2001 is further configured to: if a PDCCH is obtained through monitoring on a PDCCH monitoring occasion configured for a first SSSG, a timer corresponding to the first SSSG is stopped. The first SSSG is an SSSG that is corresponding to a time domain interval indicated by the second indication information and that is in two SSSGs.

The processor 2001 is further configured to: if no PDCCH is obtained through monitoring on the PDCCH monitoring occasion configured for the first SSSG, and the timer corresponding to the first SSSG expires, the PDCCH is monitored on a PDCCH monitoring occasion configured for a second SSSG, where the second SSSG is an SSSG in the two SSSGs other than the first SSSG.

In an optional implementation, a start moment of a foremost time domain interval in the L-1 time domain intervals is the same as a starting moment of a discontinuous reception DRX on duration timer.

In another design, when the chip is configured to implement a function of the network device in embodiments of this application:

in a manner, the interface 2002 is configured to send first indication information, where the first indication information indicates candidate M starting moments of a discontinuous reception DRX on duration timer, each of M-1 starting moments in the M starting moments other than a latest starting moment is corresponding to one monitoring window, and M is an integer greater than or equal to 2.

The interface 2002 is further configured to send a first signal in a monitoring window corresponding to a first starting moment, where the first signal indicates to start the DRX on duration timer, and the first starting moment is one of the M-1 starting moments.

In an optional implementation, the M-1 starting moments include a second starting moment, and an advance starting moment earlier than the second starting moment and/or a delayed starting moment later than the second starting moment; and the second starting moment is obtained by offsetting a DRX start moment of a DRX cycle backward by a DRX delay.

Optionally, the first indication information includes M-1 time domain offsets, and the advance starting moment and/or the delayed starting moment are/is obtained based on the M-1 time domain offsets.

In an optional implementation, the interface 2002 is further configured to send a second signal in a monitoring window corresponding to a third starting moment, where the second signal indicates not to start the DRX on duration timer at N starting moments.

The third starting moment is one of the M-1 starting moments, the N starting moments are N consecutive starting moments that are in the M-1 starting moments and that are later than the third starting moment, and N is a positive integer less than M-1.

In an optional implementation, service data is data of an XR service. The interface 2002 is further configured to: before sending the first indication information, receive characteristic information of the XR service from a core network device, where the characteristic information of the XR service includes a jitter range and/or a frame rate option set of the XR service.

The processor 2001 is configured to determine the M starting moments based on the jitter range; and/or the processor 2001 is configured to determine the DRX cycle based on the frame rate option set.

In an optional implementation, the chip 2000 is an architecture in which a DU is separated from a CU.

That the interface 2002 receives characteristic information of the XR service from a core network device is specifically: receiving, by using the CU, the characteristic information of the XR service from the core network device, and sending the characteristic information of the XR service to the DU.

That the processor 2001 determines the M starting moments based on the jitter range is specifically: determining, by using the DU, the M starting moments based on the jitter range.

That the processor 2001 determines the DRX cycle based on the frame rate option set is specifically: determining, by using the DU, the DRX cycle based on the frame rate option set.

In a manner, the interface 2002 is configured to send second indication information, where the second indication information indicates L-1 time domain intervals and L SSSGs, the L-1 time domain intervals are in one-to-one correspondence with L-1 SSSGs in the L SSSGs, L is an integer greater than 1, and distribution densities of physical downlink control channel PDCCH monitoring occasions separately configured for the L SSSGs are different.

In an optional implementation, a start moment of a foremost time domain interval in the L-1 time domain intervals is the same as a starting moment of a discontinuous reception DRX on duration timer.

In an optional implementation, the L-1 time domain intervals and the L SSSGs are determined based on a probability distribution that an arrival time of service data from a core network device complies with.

In an optional implementation, service data is data of an XR service.

The interface 2002 is further configured to: before sending the second indication information, receive characteristic information of an XR service from the core network device, where the characteristic information of the XR service includes one or more of the following: a jitter range of the XR service, the probability distribution that the arrival time of the service data complies with, and a frame rate option set.

The processor 2001 is configured to determine the L-1 time domain intervals and the L SSSGs based on the jitter range and/or the probability distribution; and/or the processor 2001 is configured to determine the DRX cycle based on the frame rate option set.

Optionally, the chip 2000 is an architecture in which a DU is separated from a CU.

That the interface 2002 receives characteristic information of the XR service from a core network device is specifically: receiving, by using the CU, the characteristic information of the XR service from the core network device, and sending the characteristic information of the XR service to the DU.

That the processor 2001 determines the L-1 time domain intervals and the L SSSGs based on the jitter range and the probability distribution is specifically: determining, by using the DU, the L-1 time domain intervals and the L SSSGs based on the jitter range and/or the probability distribution.

That the processor 2001 determines the DRX cycle based on the frame rate option set is specifically: determining, by using the DU, the DRX cycle based on the frame rate option set.

In this embodiment of this application, the communication apparatus 1900 and the chip 2000 may further perform the implementations described in the communication apparatus 1800. A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This embodiment of this application and the foregoing communication method are based on a same concept, and bring same technical effect. For a specific principle, refer to the descriptions in the foregoing communication method. Details are not described again.

A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

This application further provides a communication system. The system includes at least one network device and at least one terminal device in the foregoing aspects. In another possible design, the system further includes at least one core network device in the foregoing aspects. In still another possible design, the system may further include another device that interacts with the network device, the terminal device, and the core network device in the solutions provided in this application.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   receiving first indication information, wherein the first indication information indicates candidate M starting moments of a discontinuous reception DRX on duration timer, each of M-1 starting moments in the M starting moments other than a latest starting moment is corresponding to one monitoring window, and M is an integer greater than or equal to 2;
   monitoring a first signal in a monitoring window corresponding to each of the M-1 starting moments, wherein the first signal indicates to start the DRX on duration timer; and
   if the first signal is obtained through monitoring in a monitoring window corresponding to a first starting moment, starting the DRX on duration timer at the first starting moment, wherein the first starting moment is one of the M-1 starting moments.

2. The method according to claim 1, wherein the method further comprises:
   if the first signal is not obtained through monitoring in monitoring windows respectively corresponding to the M-1 starting moments, starting the DRX on duration timer at the latest starting moment in the M starting moments.

3. The method according to claim 1, wherein the method further comprises:
   skipping a monitoring window corresponding to a remaining starting moment in the M-1 starting moments, wherein the remaining starting moment is a starting moment that is in the M-1 starting moments and that is later than the first starting moment.

4. The method according to any one of claims 1 to 3, wherein the M starting moments comprise a second starting moment, and an advance starting moment earlier than the second starting moment and/or a delayed starting moment later than the second starting moment; and
   the second starting moment is obtained by offsetting a DRX start moment of a DRX cycle backward by a DRX delay.

5. The method according to claim 4, wherein the first indication information comprises M-1 time domain offsets, and the advance starting moment and/or the delayed starting moment are/is obtained based on the M-1 time domain offsets.

6. The method according to any one of claims 1 to 5, wherein

if a second signal is received in a monitoring window corresponding to a third starting moment, the DRX on duration timer is not started at the third starting moment and N starting moments, and the second signal indicates not to start the DRX on duration timer at the N starting moments; and

the third starting moment is one of the M-1 starting moments, the N starting moments are N consecutive starting moments that are in the M-1 starting moments and that are later than the third starting moment, and N is a positive integer less than M-1.

7. The method according to claim 6, wherein the method further comprises:
skipping monitoring windows respectively corresponding to the N starting moments.

8. A communication method, wherein the method comprises:

sending first indication information, wherein the first indication information indicates candidate M starting moments of a discontinuous reception DRX on duration timer, each of M-1 starting moments in the M starting moments other than a latest starting moment is corresponding to one monitoring window, and M is an integer greater than or equal to 2; and

sending a first signal in a monitoring window corresponding to a first starting moment, wherein the first signal indicates to start the DRX on duration timer, and the first starting moment is one of the M-1 starting moments.

9. The method according to claim 8, wherein the M-1 starting moments comprise a second starting moment, and an advance starting moment earlier than the second starting moment and/or a delayed starting moment later than the second starting moment; and

the second starting moment is obtained by offsetting a DRX start moment of a DRX cycle backward by a DRX delay.

10. The method according to claim 9, wherein the first indication information comprises M-1 time domain offsets, and the advance starting moment and/or the delayed starting moment are/is obtained based on the M-1 time domain offsets.

11. The method according to any one of claims 8 to 10, wherein the method further comprises:

sending a second signal in a monitoring window corresponding to a third starting moment, wherein the second signal indicates not to start the DRX on duration timer at N starting moments; and

the third starting moment is one of the M-1 starting moments, the N starting moments are N consecutive starting moments that are in the M-1 starting moments and that are later than the third starting moment, and N is a positive integer less than M-1.

12. The method according to any one of claims 8 to 11, wherein service data is data of an extended reality XR service; and before the sending first indication information, the method further comprises:

receiving characteristic information of the XR service from a core network device, wherein the characteristic information of the XR service comprises a jitter range and/or a frame rate option set of the XR service; and determining the M starting moments based on the jitter range; and/or determining the DRX cycle based on the frame rate option set.

13. The method according to claim 12, wherein the method is performed by an architecture in which a distributed unit DU is separated from a central unit CU;

the receiving characteristic information of the XR service from a core network device comprises: receiving, by the CU, the characteristic information of the XR service from the core network device, and sending the characteristic information of the XR service to the DU; the determining the M starting moments based on the jitter range comprises: determining, by the DU, the M starting moments based on the jitter range; and the determining the DRX cycle based on the frame rate option set comprises: determining, by the DU, the DRX cycle based on the frame rate option set.

14. A communication apparatus, wherein the apparatus comprises:

a communication unit, configured to receive first indication information, wherein the first indication information indicates candidate M starting moments of a discontinuous reception DRX on duration timer, each of M-1 starting moments in the M starting moments other than a latest starting moment is corresponding to one monitoring window, and M is an integer greater than or equal to 2; and a processing unit, configured to monitor a first signal in a monitoring window corresponding to each of the M-1 starting moments, wherein the first signal indicates to start the DRX on duration timer; and

the processing unit is further configured to: if the first signal is obtained through monitoring in a monitoring window corresponding to a first starting moment, start the DRX on duration timer at the first starting moment, wherein the first starting moment is one of the M-1 starting moments.

15. The apparatus according to claim 14, wherein the processing unit is further configured to: if the first signal is not obtained through monitoring in monitoring windows respectively corresponding to the M-1 starting moments, start the DRX on duration timer at the latest starting moment in the M starting moments.

16. The apparatus according to claim 14, wherein the processing unit is further configured to skip a monitoring window corresponding to a remaining starting moment in the M-1 starting moments, wherein the remaining starting moment is a starting moment that is in the M-1 starting moments and that is later than the first starting moment.

17. The apparatus according to any one of claims 14 to 16, wherein the M starting moments comprise a second starting moment, and an advance starting moment earlier than the second starting moment and/or a delayed starting moment later than the second starting moment; and

the second starting moment is obtained by offsetting a DRX start moment of a DRX cycle backward by a DRX delay.

18. The apparatus according to claim 17, wherein the first indication information comprises M-1 time domain offsets, and the advance starting moment and/or the delayed starting moment are/is obtained based on the M-1 time domain offsets.

19. The apparatus according to any one of claims 14 to 18, wherein

if a second signal is received in a monitoring window corresponding to a third starting moment, the DRX on duration timer is not started at the third starting moment and N starting moments, and the second signal indicates not to start the DRX on duration timer at the N starting moments; and

the third starting moment is one of the M-1 starting moments, the N starting moments are N consecutive starting moments that are in the M-1 starting moments and that are later than the third starting moment, and N is a positive integer less than M-1.

20. The apparatus according to claim 19, wherein

the processing unit is further configured to skip monitoring windows respectively corresponding to the N starting moments.

21. A communication apparatus, wherein the apparatus comprises:

a communication unit, configured to send first indication information, wherein the first indication information indicates candidate M starting moments of a discontinuous reception DRX on duration timer, each of M-1 starting moments in the M starting moments other than a latest starting moment is corresponding to one monitoring window, and M is an integer greater than or equal to 2; and

the communication unit is further configured to send a first signal in a monitoring window corresponding to a first starting moment, wherein the first signal indicates to start the DRX on duration timer, and the first starting moment is one of the M-1 starting moments.

22. The apparatus according to claim 21, wherein the M-1 starting moments comprise a second starting moment, and an advance starting moment earlier than the second starting moment and/or a delayed starting moment later than the second starting moment; and

the second starting moment is obtained by offsetting a DRX start moment of a DRX cycle backward by a DRX delay.

23. The apparatus according to claim 22, wherein the first indication information comprises M-1 time domain offsets, and the advance starting moment and/or the delayed starting moment are/is obtained based on the M-1 time domain offsets.

24. The apparatus according to any one of claims 21 to 23, wherein

the communication unit is further configured to send a second signal in a monitoring window corresponding to a third starting moment, wherein the second signal indicates not to start the DRX on duration timer at N starting moments; and

the third starting moment is one of the M-1 starting moments, the N starting moments are N consecutive starting moments that are in the M-1 starting moments and that are later than the third starting moment, and N is a positive integer less than M-1.

25. The apparatus according to any one of claims 21 to 24, wherein service data is data of an extended reality XR service;

the communication unit is further configured to: before sending the first indication information, receive characteristic information of the XR service from a core network device, wherein the characteristic information of the XR service comprises a jitter range and/or a frame rate option set of the XR service; and
a processing unit, configured to: determine the M starting moments based on the jitter range; and/or determine the DRX cycle based on the frame rate option set.

26. The apparatus according to claim 25, wherein the communication apparatus is an architecture in which a distributed unit DU is separated from a central unit CU;

that the communication unit receives characteristic information of the XR service from a core network device is specifically: receiving, by using the CU, the characteristic information of the XR service from the core network device, and sending the characteristic information of the XR service to the DU;
that the processing unit determines the M starting moments based on the jitter range is specifically: determining, by using the DU, the M starting moments based on the jitter range; and
that the processing unit determines the DRX cycle based on the frame rate option set is specifically: determining, by using the DU, the DRX cycle based on the frame rate option set.

27. A communication apparatus, comprising a memory and a processor, wherein

the memory is configured to store instructions or a computer program; and
the processor is configured to execute the computer program or the instructions stored in the memory, to enable the communication apparatus to perform the method according to any one of claims 1 to 7, or perform the method according to any one of claims 8 to 13.

28. A communication system, comprising the communication apparatus according to any one of claims 14 to 20 and the communication apparatus according to any one of claims 21 to 26.

29. A computer-readable storage medium, wherein the computer-readable storage medium is configured to store instructions, and when the instructions are run on a computer, the method according to any one of claims 1 to 7 is performed, or the method according to any one of claims 8 to 13 is performed.

30. A computer program product comprising instructions, wherein when the computer program product runs on a computer, the method according to any one of claims 1 to 7 is performed, or the method according to any one of claims 8 to 13 is performed.

FIG. 1

FIG. 2

FIG. 3

Ideal arrival time  Ideal arrival time

−4 ms  0 ms  4 ms  12.67 ms  16.67 ms  20.67 ms  Time

ms: millisecond

FIG. 4

Valid wake up signal WUS monitoring occasion

Invalid WUS monitoring occasion

Discontinuous reception DRX on duration timer runs

$t_1$  $t_2$  Minimum offset  $t_3$  Time

Power saving offset

FIG. 5

Search space set group SSSG#0  SSSG#1  Time

Physical downlink control channel PDCCH monitoring occasion

FIG. 6

Ideal arrival time                    Ideal arrival time

−4 ms        0 ms         4 ms      12.67 ms      16.67         20.67 ms
                                                   ms                              Time

Discontinuous                         DRX on duration timer
reception DRX on                              runs
duration timer runs

ms: millisecond

FIG. 7

Transmit downlink control information DCI indicating
SSSG switching

                                                                    Time

Search space set group                     SSSG#1
SSSG#0

Physical downlink control
channel PDCCH
monitoring occasion

FIG. 8

Communication
method 100

| | |
|---|---|
| Network device | Terminal device |

S101: First indication information, where the first indication information indicates candidate M starting moments of a discontinuous reception DRX on duration timer, and each of M–1 starting moments in the M starting moments other than a latest starting moment is corresponding to one monitoring window

S102: The terminal device monitors a first signal in a monitoring window corresponding to each of the M–1 starting moments, where the first signal indicates to start the DRX on duration timer

S103: The network device sends the first signal in a monitoring window corresponding to a first starting moment, where the first starting moment is one of the M–1 starting moments

S104: The terminal device starts the DRX on duration timer at the first starting moment

FIG. 9

| Monitoring window#1 | Monitoring window#2 | Monitoring window#3 | Monitoring window#4 |
|---|---|---|---|

$t_1$     $t_2$     $t_3$     $t_4$     $t_5$     Time

FIG. 10

FIG. 11

$t_7$                    $t_8$    $t_9$

Time

$t_1$         $t_2$         $t_3$        $t_4$        $t_5$        $t_6$

FIG. 12

Communication
method 200

| Network device | | Terminal device |
|---|---|---|

S201: Second indication information, where the second indication information indicates L–1 time domain intervals and L search space set groups SSSGs

S202: For each SSSG in SSSGs respectively corresponding to the L–1 time domain intervals, the terminal device monitors a physical downlink control channel PDCCH in a running period of a timer corresponding to the SSSG

FIG. 13

SSSG#1       SSSG#2          SSSG#L–1     SSSG#L

...

...        ...        ...        ...

Time

$t_1$           $t_2$           $t_3$     $t_{L-1}$       $t_L$

FIG. 14

FIG. 15

Communication
method 300

| Network device | First core network device | Second core network device |
|---|---|---|

S301: Request message, where the request message is used to request to obtain characteristic information of an extended reality XR service

S302: First message, where the first message includes the characteristic information of the XR service, and the characteristic information of the XR service includes one or more of the following: a jitter range of the XR service, a probability distribution that an arrival time of service data complies with, and a frame rate option set

S303: Second message, where the second message may include a part or all of the characteristic information of the XR service in the first message

FIG. 16

| Distributed unit DU | Central unit CU |
|---|---|

Second message, where the second message may include a part or all of characteristic information of an XR service in a first message

FIG. 17

Communication apparatus
1800

Communication
unit — 1801

Processing unit — 1802

Storage unit — 1803

FIG. 18

Communication apparatus 1900

Processor — 1901
Instruction — 1903

Memory — 1902
Instruction — 1904

Transceiver — 1905

Antenna — 1906

FIG. 19

Chip 2000

Memory — 2003

Processor — 2001

Interface — 2002

FIG. 20

## INTERNATIONAL SEARCH REPORT

International application No.

**PCT/CN2023/104267**

### A. CLASSIFICATION OF SUBJECT MATTER

H04W52/02(2009.01)i

According to International Patent Classification (IPC) or to both national classification and IPC

### B. FIELDS SEARCHED

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNTXT, ENTXTC, ENTXT, VEN, 3GPP, CNKI, IEEE: 指示, 非连续接收, 持续时间定时器, 启动, 开启, 开始, 时刻, 监听, 侦听, 窗口, 唤醒, 节能, 扩展现实, indicate, DRX, onDurationTimer, startup, moment, time, monitor, window, wake up, WUS, power saving, XR

### C. DOCUMENTS CONSIDERED TO BE RELEVANT

| Category* | Citation of document, with indication, where appropriate, of the relevant passages | Relevant to claim No. |
|---|---|---|
| A | QUALCOMM INCORPORATED. "Moderator Summary#2 on XR specific power saving techniques"<br>*3GPP TSG RAN WG1 #109-e R1-2205411*, 20 May 2022 (2022-05-20),<br>sections 3-4 | 1-30 |
| A | VIVO. "Discussion on XR specific power saving enhancements"<br>*3GPP TSG RAN WG1 #109-e R1-2203585*, 29 April 2022 (2022-04-29),<br>entire document | 1-30 |
| A | CN 112533232 A (VIVO COMMUNICATION TECHNOLOGY CO., LTD.) 19 March 2021 (2021-03-19)<br>entire document | 1-30 |
| A | CN 114600510 A (OPPO GUANGDONG MOBILE TELECOMMUNICATIONS CO., LTD.) 07 June 2022 (2022-06-07)<br>entire document | 1-30 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 August 2023** | **07 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/104267** |

**C. DOCUMENTS CONSIDERED TO BE RELEVANT**

| Category* | Citation of document, with indication, where appropriate, of the relevant passages | Relevant to claim No. |
| --- | --- | --- |
| A | WO 2020220361 A1 (OPPO GUANGDONG MOBILE TELECOMMUNICATIONS CO., LTD.) 05 November 2020 (2020-11-05) <br> entire document | 1-30 |
| A | WO 2021141832 A1 (QUALCOMM INC.) 15 July 2021 (2021-07-15) <br> entire document | 1-30 |

Form PCT/ISA/210 (second sheet) (July 2022)

INTERNATIONAL SEARCH REPORT
Information on patent family members

International application No.

**PCT/CN2023/104267**

| Patent document cited in search report | | | Publication date (day/month/year) | Patent family member(s) | | | Publication date (day/month/year) |
|---|---|---|---|---|---|---|---|
| CN | 112533232 | A | 19 March 2021 | WO | 2021052413 | A1 | 25 March 2021 |
| | | | | CN | 112533232 | B | 10 June 2022 |
| CN | 114600510 | A | 07 June 2022 | WO | 2021092861 | A1 | 20 May 2021 |
| WO | 2020220361 | A1 | 05 November 2020 | CN | 112970293 | A | 15 June 2021 |
| | | | | CN | 112970293 | B | 08 July 2022 |
| WO | 2021141832 | A1 | 15 July 2021 | US | 2021219233 | A1 | 15 July 2021 |
| | | | | CN | 114930979 | A | 19 August 2022 |
| | | | | IN | 202227031923 | A | 26 August 2022 |
| | | | | EP | 4088547 | A1 | 16 November 2022 |
| | | | | US | 11553427 | B2 | 10 January 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210815094